# NEUE EUROPÄISCHE PATENTSCHRIFT

(11) **EP 1 477 340 B2**
(45) Veröffentlichungstag und Bekanntmachung des Hinweises auf die Entscheidung über den Einspruch: **30.03.2016**
(45) Hinweis auf die Patenterteilung: 10.12.2008
(21) Anmeldenummer: 04019641.2
(22) Anmeldetag: 29.03.2001
(51) Int. Cl.: B60D 1/54

(54) **Anhängekupplung**
Trailer coupling
Attelage de remorque

(30) Priorität: 05.04.2000 DE 10017013
(43) Veröffentlichungstag der Anmeldung: 17.11.2004
(62) Teilanmeldung aus: 01107981.1
(73) Patentinhaber: Scambia Holdings Cyprus Limited, 3106 Limassol (CY)
(72) Erfinder: Kleb, Emmerich, 71706 Markgröningen (DE); Fischer, Michael, 71679 Asperg (DE); Riehle, Hans, 71638 Ludwigsburg (DE)
(74) Vertreter: Hoeger, Stellrecht & Partner Patentanwälte mbB

(56) Entgegenhaltungen:
- EP-A- 0 799 732
- EP-A- 1 024 036
- DE-A- 19 605 570
- DE-A- 19 858 978
- DE-A- 19 859 961
- DE-U- 7 233 868

## Beschreibung

Die Erfindung betrifft eine Anhängekupplung für Kraftfahrzeuge, umfassend einen fahrzeugfest angeordneten Schwenklagerkörper, an welchem ein Schwenkelement um eine Schwenkachse schwenkbar gelagert ist, einen sich ausgehend von dem Schwenkelement erstreckenden Kugelhals, deran seinem dem Schwenkelement abgewandten Ende eine Kupplungskugel trägt und der durch eine Schwenkbewegung um die Schwenkachse zwischen einer Arbeitsstellung und einer Ruhestellung verschwenkbar ist, und eine Verriegelungsvorrichtung zur drehfesten formschlüssigen Festlegung des Schwenkelernerits gegenüber dem Schwenklagerkörper.

Derartige Anhängekupplungen sind beispielsweise der EP 0 799 732 und DE 19 858 978 bekannt.

Bei derartigen Anhängekupplungen ist jedoch eine aufwendig aufgebaute Verriegelungsvorrichtung erforderlich.

Der Erfindung liegt daher die Aufgabe zugrunde, eine Anhängekupplung der gattungsgemäßen Art derart zu verbessern, dass die Verriegelungsvorrichtung möglichst einfach aufgebaut ist und sich in einfacher Art und Weise realisieren lässt.

Diese Aufgabe wird durch eine Anhängekupplung mit den Merkmalen des Anspruchs 1 gelöst.

Der Vorteil dieser Lösung ist somit darin zu sehen, dass dem ohnehin relativ zum Schwenklagerkörper bewegbar zu lagernden Schwenkelement die Möglichkeit einer zusätzlichen Bewegung in Richtung der Schwenkachse verliehen wird, um mit dieser zusätzlichen Bewegung von einer gegenüber dem Schwenklagerkörper drehfest fixierten Stellung in eine gegenüber dem Schwenklagerkörper drehbare Stellung überzugehen und umgekehrt.

Damit sind in konstruktiv besonders vorteilhafter Weise die für die Schwenkbewegung und die Fixierung des Schwenkelements erforderlichen kinematischen Bewegungen auf dieses Schwenkelement verlagert.

Dies ist insbesondere auch deshalb vorteilhaft, da bei der Schwenkbewegung selbst auf das Schwenkelement keine großen Kräfte wirken, so dass die Schwenklagerung selbst nicht notwendigerweise so konstruiert sein muss, dass sie die gesamten im Zugbetrieb auf den Kugelhals wirkenden Kräfte aufnimmt, vielmehr kann die formschlüssige Fixierung des Schwenkelements so ausgebildet sein, dass sie einen nennenswerten Teil der auf den Kugelhals in Arbeitsstellung wirkenden Kräfte aufnimmt.

Erfindungsgemäß ist das Schwenkelementmittels eines Lagerzapfens an dem Schwenklagerkörper gelagert und gegenüber dem Lagerzapfen drehbar, so dass zwischen beiden eine Relativbewegung möglich ist.

Erfindungsgemäß ist das Schwenkelement mit mindestens einem ersten Formschlusselement drehfest verbunden wobei das mindestens eine erste Formschlusselement relativ zum Schwenkelement feststehend angeordnet ist, so dass dieses sowohl in Drehrichtung um die Schwenkachse als auch in Richtung der Schwenkachse gegenüber dem Schwenkelement unbeweglich ist.

Ferner ist erfindungsgemäß, der Schwenklagerkörper mit mindestens einem im Wesentlichen gegenüber der Schwenkachse drehfesten zweiten Formschlusselement verbunden, mittels welchem gemeinsam mit dem ersten Formschlusselement eine Drehfestlegung des Schwenkelements relativ zum Schwenklagerkörper erreichbar ist, wobei ebenfalls das mindestens eine zweite Formschlusselement relativzum Schwenklagerkörper unbeweglich fixiert ist.

Aus Gründen einer möglichst einfachen konstruktiven Lösung sind erfindungsgemäß das erste Formschlusselement oder das zweite Formschlusselement In demjeweils anderen Formschlusselement in Eingriff bringbar.

Um eine möglichst spielfreie Festlegung des Schwenkelements relativ zum Schwenklagerkörper in der drehfesten Stellung zu erreichen, ist erfindungsgemäß vorgesehen, dass mindestens eines der Formschlusselemente sich in einer Eingreifrichtung verjüngende Formschlussflächen aufweist, welche zur drehfesten Festlegung des Schwenkelements relativ zum Schwenklagerkörper dienen.

Diese sich verjüngenden Flächen haben die Wirkung, dass beim Zusammenwirken mit einem weiteren Formschlusselement, welches an diesen sich verjüngenden Fischen anliegt, eine spielfreie Festlegung gegen eine Drehbewegung um die Schwenkachse möglich ist.

Vorzugsweise erstreckt sich der Kugelhals in der Arbeitsstellung in einer Längsmittelebene des Kraftfahrzeugs und in der Ruhestellung quer zur Längsmittelebene.

Prinzipiell könnten diese sich in Eingreifrichtung verjüngenden Flächen beliebig ausgebildet sein. So wäre es denkbar, diese sich In Eingreifrichtung verjüngenden Flächen parabolisch oder hyperbolisch aufeinander zulaufen zu lassen.

Eine konstruktiv besonders einfache Lösung sieht jedoch vor, dass die sich in Eingreifrichtung verjüngenden Flächen konisch aufeinander zu verlaufen.

Derartige, sich in Eingreifrichtung verjüngende Flächen haben jedoch den Nachteil, dass sie dann, wenn der Keilwinkel größer als der Keilwinkel der Selbsthemmung ist, beim Auftreten großer Kräfte und insbesondere großer Drehmomente dazu neigen, wieder mit der jeweiligen Gegenfläche außer Eingriff zu kommen.

Aus diesem Grund sieht eine besonders günstige Lösung vor, dass die Formschlusselemente parallel zur Eingreifrichtung verlaufende Formschlussflächen aufweisen, welche verhindern, dass aufgrund zu großer Kräfte oder Drehmomente die Formschlusselemente außer Eingriff kommen.

Besonders günstig ist es, wenn diese in Eingreifrichtung parallel verlaufenden Formschlussflächen sich an die sich verjüngenden Formschlussflächen anschließen, so dass, falls aufgrund der sich verjüngenden Formschlussflächen die Formschlusselemente sich gegeneinander entgegengesetzt zur Eingreifrichtung verschieben, die parallel zur Eingreifrichtung verlaufenden Flächen stets dafür sorgen, dass die Formschlusselemente in Eingriff bleiben.

Die erfindungsgemäße Lösung sieht jedoch vor, dass das Schwenkelement relativ zum Schwenklagerkörper mittels der Formschlusselemente in zueinander entgegengesetzten Drehrichtungen festlegbar ist.

Im Zusammenhang mit der bisherigen Erläuterung der einzelnen Ausführungsformen der erfindungsgemäßen Lösung wurde nicht im einzelnen darauf eingegangen, in welcher Stellung der Kugelhals durch das Schwenkelement drehfest gegenüber dem Schwenklagerkörper fixiert sein soll.

Vorzugweise ist dabei vorgesehen, dass das Schwenkelement zumindest in der Arbeitsstellung des Kugelhalses mittels der Formschlusselemente drehfest gegenüber dem Schwenklagerkörper festlegbar ist.

Im Zusammenhang mit der bisherigen Erläuterung der erfindungsgemäßen Lösung wurde nicht näher darauf eingegangen, wie eine Festlegung des Schwenkelements in der jeweiligen Stellung in Richtung der Schwenkachse erfolgen soll.

Beispielsweise wäre es denkbar, die einzelnen Stellungen definiert durch Formschluss festzulegen.

Um jedoch die Möglichkeit einer spielfreien drehfesten Festlegung des Schwenkelements relativ zum Schwenklagerkörper vorteilhaft realisieren zu können, ist vorzugsweise vorgesehen, dass die Formschlusselemente in ihrer das Schwenkelement relativ zum Schwenklagerkörper drehfest fixierenden Stellung mittels eines Keilgetriebes verspannbar sind.

Ein derartiges Verspannen der Formschlusselemente dient dazu, das Spiel im Wesentlichen zu beseitigen und somit eine spielfreie Fixierung des Schwenkelements relativ zum Schwenklagerkörper zu erhalten.

Hinsichtlich der Ausbildung des Schwenklagerkörpers zurformschlüssigen Fixierung des Schwenkelements wurden im Zusammenhang mit der bisherigen Erläuterung dereinzelnen Ausführungsbeispiele keine weiteren Angaben gemacht. So ist es besonders günstig, wenn die Formschlusselemente zwischen dem Schwenkelement und einer Lagerwange des Schwenklagerkörpers angeordnet sind und wenn das Keilgetriebe einerseits auf das Schwenkelement und andererseits auf die Lagerwange wirkt und somit mittels des Keilgetriebes das Schwenkelement gegen die Lagerwange verspannbar ist.

Beispielsweise wäre es dabei denkbar, dass das Keilgetriebe indirekt auf die das mindestens eine zweite Formschlusselementtragende Lagerwangewirkt, beispielsweise über eine weitere am Schwenklagerkörper vorgesehene Lagerwange.

Eine besonders günstige Lösung sieht jedoch vor, dass das Keilgetriebe unmittelbar an der Lagerwange angreift und somit das Schwenkelement gegen diese Lagerwange verspannt.

Diese Lösung hat den großen Vorteil, dass der Schwenklagerkörper nicht dazu dienen muss, die zum Verspannen erforderlichen Kräfte umzuleiten, sondern dass durch die unmittelbare Wirkung des Keilgetriebes auf die das mindestens eine zweite Formschlusselement tragende Lagerwange die Kräfte im Wesentlichen zwischen dem Schwenkelement und der Lagerwange wirksam sind und der übrige Teil des Schwenklagerkörpers von diesen zum Verspannen erforderlichen Kräften unbehelligt ist.

Ein derartiges Keilgetriebe kann in unterschiedlichster Art und Weise ausgebildet sein.

Eine Möglichkeit der Realisierung eines derartigen Keilgetriebes wäre die Verwendung eines Exzenters.

Als besonders günstige Form eines Keilgetriebes hat sich ein aus zwei ineinandergreifenden Gewinden gebildetes Keilgetriebe erwiesen, da dieses in einfacher Weise insbesondere durch elektromotorische Antriebe antreibbar ist.

Prinzipiell wäre es Im Rahmen der erfindungsgemäßen Lösung denkbarein Keilgetriebe lediglich zum Verspannen der Formschlusselemente einzusetzen.

Besonders günstig ist es jedoch, wenn zur Erzeugung der Bewegung des Schwenkelements in Richtung der Schwenkachse relativ zum Schwenklagerkörper ein Keilgetriebe vorgesehen ist.

Ein derartiges Keilgetriebe kann grundsätzlich unterschiedlich von dem Keilgetriebe sein, dass zum Verspannen der Formschlusselemente dient.

Eine besonders günstige Lösung sieht jedoch vor, dass dasselbe Kellgetriebe einerseits zum Verschieben des Schwenkelements relativ zum Schwenklagerkörper und andererseits auch zum Verspannen der Formschlusselemente dient.

Hinsichtlich des zum Verschieben des Schwenkelements vorgesehenen Keilgetriebes ist es ebenfalls zweckmäßig, wenn dieses durch zwei ineinandergreifende Gewinde gebildet ist.

Besonders günstig bei Verwenden eines Lagerzapfens ist es, wenn über eine Verschiebung des Lagerzapfens eine Verschiebung des Schwenkelements zwischen den einzelnen Stellungen erreichbar ist.

Insbesondere ist dabei beispielsweise durch Zugwirkung oder Druckwirkung auf den Lagerzapfen auch ein Verspannen der Formschlusselemente in der Arbeitsstellung möglich.

Bei Verwendung eines Lagerzapfen, gegenüberweichem das Schwenkelement drehbar ist, besteht bei einer konstruktiv besonders günstigen Lösung aber auch die Möglichkeit, den Lagerzapfen drehbar im Schwenklagerkörper zu lagern und über den Lagerzapfen eine Schwenkbewegung des Schwenkelements relativ zum Schwenklagerkörper zu erreichen.

Besonders günstig ist es dabei, wenn zwischen dem drehbar angetriebenen Lagerzapfen und dem Schwenkelement eine drehmomentauslösende Kupplung vorgesehen ist, so dass über einen drehbaren Antrieb des Lagerzapfens auch die Möglichkeit besteht, das Schwenkelement zwischen zwei Anschlägen, beispielsweise einem Anschlag in der Arbeitsstellung und einem Anschlag in der Ruhestellung zu schwenken ohne dass bei Erreichen der Anschlagstellung eine Blockierung des motorischen Antriebs erfolgt.

Dies ist insbesondere vorteilhaft bei all den Lösungen, für welchen über einen einzigen motorischen Antrieb sowohl die Verschiebung des Schwenkelements als auch die Schwenkbewegung des Schwenkelements erreichbar ist.

Im Zusammenhang mit der Erläuterung der einzelnen Ausführungsformen der erfindungsgemäßen Lösung wurde nicht im Einzelnen Auf die Stellungen des Schwenkelements relativ zum Schwenklagerkörper eingegangen. So sieht eine besonders vorteilhafte Lösung vor, dass das Schwenkelement in Richtung der Schwenkachse zwischen einer gegenüber dem Schwenklagerkörper verschwenkbaren Stellung und einer Haltestellung bewegbar ist, in welcher das Schwenkelement am Schwenklagerkörper drehfest fixiert ist.

Das heißt, dass bei dieser Lösung mindestens zwei Stellungen des Schwenkelements relativ zum Schwenklagerkörper vorgesehen sind, zwischen denen das Schwenkelement durch Verschiebung in Richtung der Schwenkachse hin und her bewegbar ist. Eine besonders bevorzugte Lösung sieht dabei vor, dass das Schwenkelement sowohl in der Ruhestellung des Kugelhalses als auch in der Arbeitsstellung des Kugelhalses in der einen Haltestellung steht.

Das heißt, dass bei dieser Lösung das Schwenkelement in Richtung der Schwenkachse aus der Haltestellung heraus bewegbar ist, um dieses um die Schwenkachse verschwenken zu können, beispielsweise von der Ruhestellung in die Arbeitsstellung oder von der Arbeitsstellung in die Ruhestellung und anschließend wieder ein Bewegen des Schwenkelements in die Haltestellung erfolgt, um dieses formschlüssig relativ zum Schwenklagerkörper zu fixieren.

Eine andere vorteilhafte Lösung sieht dabei vor, dass das Schwenkelement in der Ruhestellung des Kugelhalses in einer ersten Stellung steht, dass das Schwenkelement von der ersten Stellung in die verschwenkbare Stellung bringbar ist und von der verschwenkbaren Stellung in die Haltestellung, in welcher der Kugelhals in der Arbeitsstellung steht.

Das heißt; dass bei dieser Lösung mindestens drei verschiedene Stellungen des Schwenkelements vorgesehen sind, zwischen denen dieses durch Verschieben in Richtung der Schwenkachse hin und her bewegbar ist, wobei die erste Stellung und die Haltestellung auf gegenüberliegenden Seiten der verschwenkbaren Stellung angeordnet sind, so dass durch Bewegung in einer einzigen Richtung ein Übergang von der Ruhestellung in die Arbeitsstellung erfolgt oder von der Arbeitsstellung in die Ruhestellung und jeweils zwischen diesen die verschwenkbare Stellung erreicht wird, in der das Verschwenken des Kugelhalses von der Arbeitsstellung in die Ruhestellung erfolgen kann.

Hinsichtlich der ersten Stellung wurden keine näheren Angaben zur Fixierung des Schwenkelements gemacht. Beispielsweise wäre es denkbar, das Schwenkelement über einen selbsthemmenden Antrieb anzutreiben und in der ersten Stellung einfach über die Selbsthemmung des Antriebs zu fixieren.

Da jedoch die Anhängekupplung in der Ruhestellung lange Zeigt verweilen soll und diese Aufrecht erhalten werden soll, ist es vorteilhaft, wenn die erste Stellung ebenfalls eine Haltestellung ist, in welcher das Schwenkelement drehfest gegenüber dem Schwenklagerkörper fixiert ist.

Diese Fixierung könnte beispielsweise auch durch Kraftschluss erfolgen. Besonders günstig ist es jedoch, wenn das Schwenkelement in der ersten Stellung durch Formschluss relativ zum Schwenklagerkörper fixiert ist, wobei der Formschluss nicht unmittelbar zwischen dem Schwenklagerkörper und dem Schwenkelement hergestellt werden muss. Es ist auch denkbar, dem Formschluss im Bereich des Kugelhalses oder anderer Elemente, beispielsweise eines Anschlagnockens vorzusehen,

Prinzipiell wäre es im Rahmen der erfindungsgemäßen Lösung denkbar, die Verschiebung des Schwenkelements relativ zum Schwenklagerkörper manuell vorzunehmen.

Ferner wäre es auch denkbar, manuell eine Festlegung des Schwenkelements in der jeweiligen Stellung relativ zum Schwenklagerkörper, das heißt in der drehfestfixierten Stellung oder in derdrehbaren Stellung manuell festzulegen.

Besonders günstig ist es jedoch, wenn das Schwenkelement motorisch, vorzugsweise mittels eines Elektromotors, in Richtung der Schwenkachse zwischen den einzelnen Stellungen bewegbar ist.

Ferner ist es ebenfalls im Rahmen der erfindungsgemäßen Lösung von Vorteil, wenn das Erreichen der Spielfreiheit bei der drehfesten Festlegung des Schwenkelements relativ zum Schwenklagerkörper mittels eines motorischen Antriebs erfolgt, so dass auch die Fixierung in der jeweiligen Stellung des Schwenkelements motorisch erreichbar ist.

Insbesondere beim Vorsehen eines motorischen Antriebs hat sich ein Keilgetriebe entweder zur Bewegung des Schwenkelements relativ zum Schwenklagerkörperoderzum Verspannen der Formschlusselemente in das Schwenkelement drehfest fixierenden Stellung oder zu beiden Zwecken als vorteilhaft erwiesen.

Untereinem Keilgetriebe im Sinne dieser Erfindung ist dabei ein Getriebe zu verstehen, das mit einer schräg zu ihrer Bewegungsrichtung verlaufenden Keilfläche arbeitet. Derartige Keilgetriebe sind beispielsweise Schubkeilgetriebe, Kurvengetriebe, Exzentergetriebe oder Schraubengetriebe.

Hinsichtlich der Einleitung der Schwenkbewegung des Schwenkelements in seiner relativ zum Schwenklagerkörperdrehbaren Stellung wurden bislang keine näheren Angaben gemacht.

Beispielsweise wäre es denkbar, das Schwenkelement in seiner gegenüber dem Schwenklagerkörper verschwenkbaren Stellung manuell zu verschwenken.

Als besonders günstig hat es sich jedoch erwiesen, wenn das Schwenkelement in seiner relativ zum Schwenklagerkörper verschwenkbaren Stellung motorisch, vorzugsweise mittels eines Elektromotors, zwischen einer Arbeitsstellung und einer Ruhestellung verschwenkbar Ist.

Ein derartiger motorischer Antrieb kann ein ausschließlich für die Schwenkbewegung vorgesehener Schwenkantrieb sein.

Alternativ dazu ist es aber auch möglich, den Schwenkantrieb von einem motorischen Antrieb abzuleiten, welcher die Verschiebung des Schwenkelements in Richtung der Schwenkachse zwischen den einzelnen Stellungen bewirkt.

Beispielsweise wäre dies durch umschaltbare Kupplungen denkbar, so dass einerseits von einem motorischen Antrieb eine Verschiebung des Schwenkelements relativ zum Schwenklagerkörper in Richtung der Schwenkachse bewirkbar ist und beispielsweise durch umschaltbare Kupplungen ein Verschwenken des Schwenkelements in dergegenüberdem Schwenklagerkörper drehbaren Stellung.

Aus Gründen einer konstruktiv möglichst einfachen Lösung sieht eine andere vorteilhafte Ausführungsform der erfindungsgemäßen Lösung vor, dass der Schwenkantrieb mit dem motorischen Antrieb für die Bewegung des Schwenkelements zwischen der drehfest fixierten Stellung und der gegenüber dem Schwenklagerkörper drehbaren Stellung über eine drehmomentauslösende Kupplung gekoppelt ist.

Eine derartige drehmomentauslösende Kupplung kann beispielsweise eine bei Überschreiten eines maximal Drehmoments ausrastende Kupplung sein oder eine Rutschkupplung, welche beim Blockieren der Schwenkbewegung des Schwenkelements, beispielsweise durch Anschläge, nicht gleichzeitig den motorischen Antrieb für die Verschiebung des Schwenkelements zwischen den verschiedenen Stellungen blockiert, sondern die Möglichkeit schafft, das trotz blockierter Drehbewegung der Antrieb weiterläuft und somit in der Lage ist, das Schwenkelement trotz blockierter Schwenkbewegung von dergegenüberdem Schwenklagerkörperdrehbaren Stellung in die drehfestfixierte Stellung und umgekehrt zu bewegen.

Eine weitere Ausführungsform sieht vor, dass die Verriegelungsvorrichtung ein erstes Formschlusselement und ein zweites Formschlusselement umfasst, die durch einen ersten motorischen Antrieb in eine das Schwenkelement relativ zum Schwenklagerkörper drehfest festlegende Stellung bringbar sind, und dass das Schwenkelement mittels eines zweiten motorischen Antriebs zwischen der Arbeitsstellung und der Ruhestellung verschwenkbar ist.

Im Zusammenhang mit der erfindungsgemäßen Lösung wurde bislang nicht auf die den Betrieb derselben bei Verwendung von einem oder mehreren motorischen Antrieben eingegangen.

So sieht eine besonders vorteilhafte Lösung der erfindungsgemäßen Anhängekupplung vor, daß diese eine Steuerung umfaßt, daß mit der Steuerung mittels mindestens eines Sensors die Bewegungen des Schwenkelements von der Arbeitsstellung in die Ruhestellung und umgekehrt überwachbar sind.

Insbesondere ist dabei vorgesehen, daß die Steuerung die Schwenkbewegung dann unterbricht, wenn die Steuerung eine Abweichung der Bewegung des Schwenkelements von der vorgegebenen Bewegungsform erkennt.

Eine derartige Abweichung der Bewegung des Schwenkelements von der vorgegebenen Bewegungsform läßt sich erfindungsgemäß besonders dann vorteilhaft realisieren, wenn die einzelnen Stellungen des Schwenkelements mittels des Sensors detektierbar sind.

Beispielsweise ist es denkbar, mittels eines Sensors die Bewegungen des Schwenkelements ständig daraufhin zu überwachen, ob diese von der vorgesehenen Bewegungsform abweichen.

Besonders günstig läßt sich dies dann realisieren, wenn die vorgegebenen Bewegung des Schwenkelements durch Abtasten einer mit dieser korrelierten Kulissenbahn überwachbar ist.

Beispielsweise läßt sich in diesem Fall die Kulissenbahn so ausformen, daß der Sensor dann, wenn dieser ungehindert der Kulissenbahn folgen kann, kein Signal gibt, während bei einer Abweichung von der Kulissenbahn der Sensor ein Signal abgibt.

Um insbesondere bei einem einzigen Antrieb den Antrieb rechtzeitig abschalten zu können, ist vorzugsweise vorgesehen, daß die Steuerung eine Stromüberwachung für den motorischen Antrieb aufweist und daß bei Überschreiten eines maximal vorgegebenen Stroms die Steuerung den Antrieb unterbricht.

Damit läßt sich beispielsweise in den Endstellungen in einfacher Weise ein Abschalten des Antriebs erreichen.

Ferner ist aber auch mit dieser Lösung die Möglichkeit denkbar, dann den Antrieb abzuschalten, wenn der Kugelhals bei seiner Schwenkbewegung auf ein Hindernis, beispielsweise einen Nutzer des Kraftfahrzeugs trifft.

Ferner hat die erfindungsgemäße Lösung umfassend das Abschalten des Antriebs den Vorteil, daß unterschiedlichen Phasen der Bewegung unterschiedliche Schwellwerte zugeordnet werden können, so daß beispielsweise mittels eines hohen Schwellwerts beim Anlaufen ein hohes Los-Brechmoment zur Verfügung steht, während in all den Phasen, in welchen mit einer Kollision zwischen dem Kugelhals und einem Körperteil des Bedieners gerechnet werden muß, der Schwellwert niedriger angesetzt wird.

Weitere Merkmale und Vorteile der Erfindung sind Gegenstand der nachfolgenden Beschreibung sowie derzeichnerischen Darstellung einiger Ausführungsbeispiele.

In der Zeichnung zeigen:
- Fig. 1: eine Rückansicht eines Kraftfahrzeugs mit einer erfindungsgemäßen Anhängekupplung;
- Fig. 2: einen Schnitt längs Linie 2-2 in Fig. 1;
- Fig. 3: eine Draufsicht in Richtung des Pfeils A in Fig. 1;
- Fig. 4: einen Schnitt durch ein nicht dem Anspruch 1 unterfallendes erstes Ausführungsbeispiel einer Anhängekupplung, dargestellt entsprechend einer Blickrichtung in Richtung des Pfeils B in Fig. 3;
- Fig. 5: eine Darstellung ähnlich Fig. 4 eines nicht dem Anspruch 1 unterfallenden zweiten Ausführungsbeispiels einer Anhängekupplung;
- Fig. 6: eine Darstellung eines Lagerzapfens des zweiten Ausführungsbeispiels mit einem Teil der Rutschkupplung;
- Fig. 7: eine Draufsicht auf ein weiteres Teil der Rutschkupplung mit einer Blickrichtung entsprechend einem Pfeil C in Fig. 8;
- Fig. 8: einen Schnitt längs Linie 8-8 in Fig. 7;
- Fig. 9: einen Schnitt längs Linie 9-9 in Fig. 5 bei Erreichen einer Ruhestellung;
- Fig. 10: eine Ansicht in Richtung des Pfeils D in Fig. 9;
- Fig. 11: eine Darstellung ähnlich Fig. 4 eines nicht dem Anspruch 1 unterfallenden dritten Ausführungsbeispiels;
- Fig. 12: eine Darstellung ähnlich Fig. 4 eines vierten Ausführungsbeispiels;
- Fig. 13: eine ausschnittsweise vergrößerte Darstellung des Bereichs E in Fig. 12;
- Fig. 14: eine ausschnittsweise vergrößerte Darstellung von Formschlußelementen beim nicht dem Anspruch 1 unterfallenden vierten Ausführungsbeispiel;
- Fig. 15: einen Schnitt längs Linie 15-15 in Fig. 12;
- Fig. 16: eine Darstellung ähnlich Fig. 14 einer ersten Variante des vierten Ausführungsbeispiels;
- Fig. 17: eine Draufsicht entsprechend Linie 17-17 in Fig. 16;
- Fig. 18: eine ausschnittsweise vergrößerte Darstellung einer im Bereich G dargestellten Detektionsnut im Schwenkelement entsprechend Fig. 12;
- Fig. 19: eine relative Stellung von Detektionsnut und Taster in der drehfest fixierten Stellung des Schwenkelements, welche der Arbeitsstellung des Kugelhalses entspricht;
- Fig. 20: eine relative Stellung von Detektionsnut und Taster in der schwenkbaren Stellung des Schwenkelements gegenüber dem Schwenklagerkörper und
- Fig. 21: eine relative Stellung von Detektionsnut und Taster in der Stellung des Schwenkelements, welche der Ruhestellung des Kugelhalses entspricht.

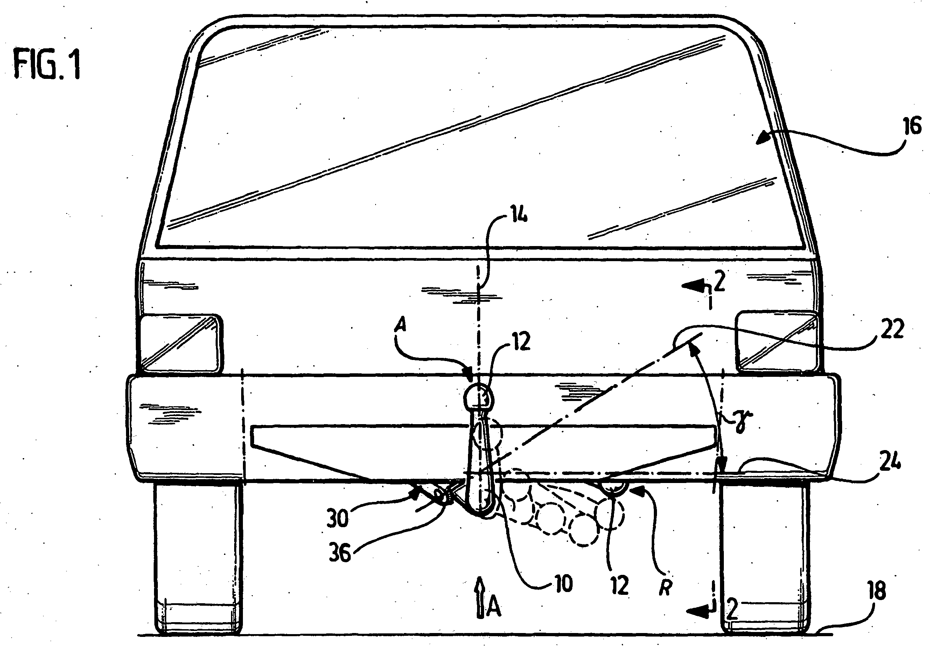

Eine in Fig. 1 dargestellte erfindungsgemäße Anhängekupplung umfaßt einen Kugelhals 10 mit einer Kupplungskugel 12, wobei der Kugelhals in einerArbeitsstellung A sich in einer Längsmittelebene 14 eines Kraftfahrzeugs 16 erstreckt und die Kupplungskugel 12 auf einer einer Fahrbahn 18 abgewandten Seite des Kugelhalses 10 steht.

Dieser Kugelhals 10 ist bei der erfindungsgemäßen Kupplung von einer Arbeitsstellung A in eine Ruhestellung R schwenkbar, wobei die Schwenkachse beliebig ausgerichtet sein kann. Die Schwenkachse kann senkrecht zur Längsmittelebene 14 in horizontaler Richtung verlaufen, die Schwenkachse kann in der Längsmittelebene 14 in ungefähr vertikaler Richtung verlaufen.

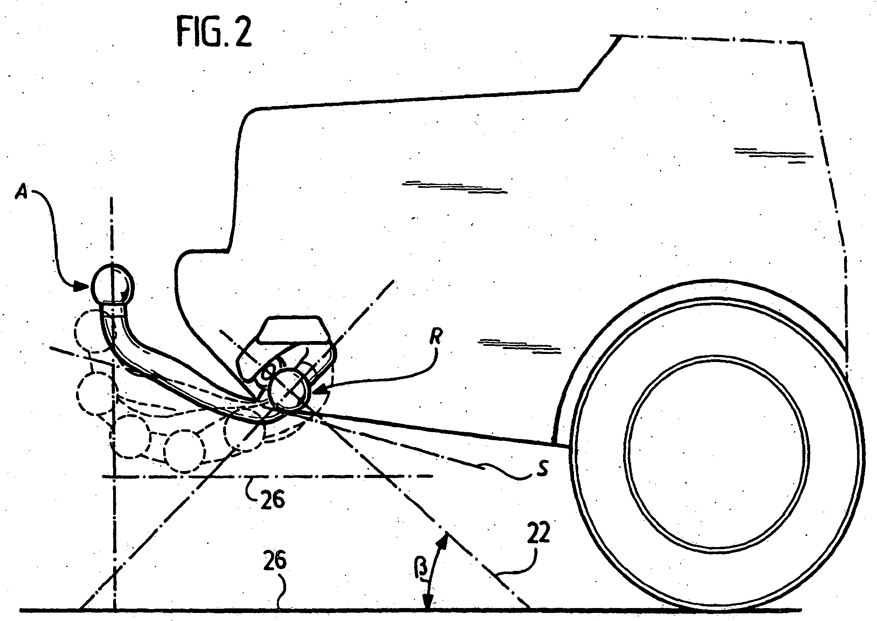

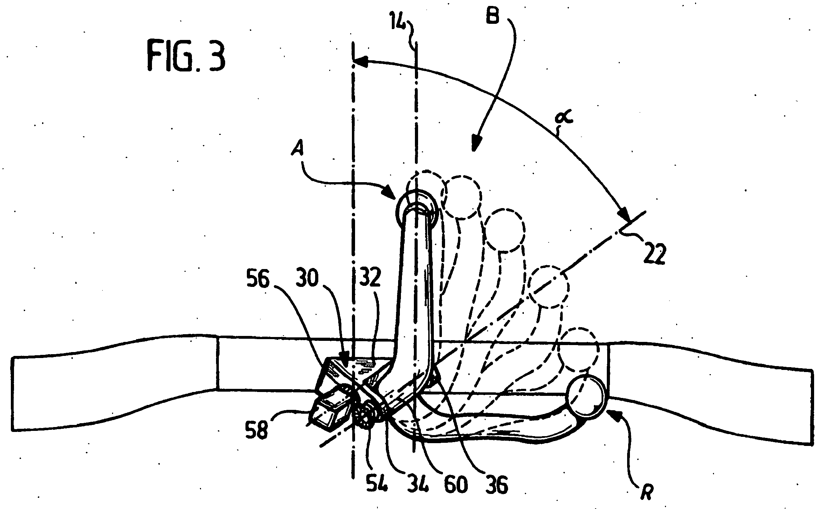

Außerdem ist es denkbar, wie bei dem Beispiel in Fig. 1, 2 und 3 dargestellt, die Schwenkachse 22 in einem Winkel α gegenüber der Längsmittelebene 14 des Kraftfahrzeugs 16 verlaufen zu lassen, wobei der Winkel α im Bereich von ungefähr 40° bis ungefähr 70° liegt und die Schwenkachse 22 in einem Winkel β relativ zur in der Längsmittelebene 14 liegenden Horizontalen 26 verlaufen zu lassen, wobei der Winkel β im Bereich von ungefähr 30° bis ungefähr 50° liegt, und außerdem die Schwenkachse 22 in einem Winkel γ gegenüber einer senkrecht auf der Längsmittelebene 14 stehenden Horizontalen 24 verlaufen zu lassen, wobei der Winkel γ im Bereich von ungefähr 20° bis ungefähr 40° liegt.

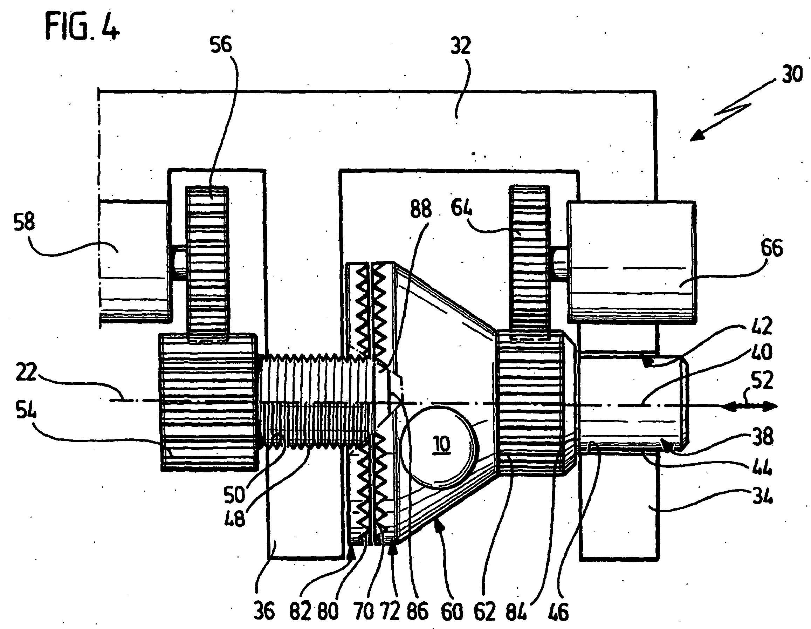

Ein erstes Ausführungsbeispiel einer Anhängekupplung, dargestellt in Fig. 4, umfaßt nun zur drehbaren Lagerung des Kugelhalses 10 um die Schwenkachse 22 einen Schwenklagerkörper 30, welcher beispielsweise eine Basis 32 und zwei von der Basis 32 abstehende Lagerwangen 34 und 36 umfaßt.

In den Lagerwangen 34 und 36 ist ein Lagerzapfen 38 um seine Achse 40 drehbar gelagert, wobei die Achse 40 die Schwenkachse 22 für den Kugelhals 10 darstellt.

Dabei erfolgt die Lagerung des Lagerzapfens 38 in der Lagerwange 34 beispielsweise mittels eines Gleitlagers 42, gebildet durch eine Umfangsfläche 44 des Lagerzapfens 38 und eine Lagerbohrung 46 in der Lagerwange 34.

Ferner trägt der Lagerzapfen 38 in seinem die Lagerwange 36 durchsetzenden Abschnitt ein Außengewinde 48, welches in ein Innengewinde 50 in der Lagerwange 36 eingreift, so daß ein Drehen des Lagerzapfens 38 dazu führt, daß sich aufgrund der ineinandergreifenden Gewinde 48 und 50 der Lagerzapfen 38 in einer Richtung 52 parallel zur Achse 40 relativ zu den Lagerwangen 34 und 36 verschieben läßt.

Zum drehbaren Antrieb des Lagerzapfens 38 ist dieser auf einer der Lagerwange 34 gegenüberliegenden Seite der Lagerwange 36 mit einem Antriebsritzel 54 versehen, in welches ein Ritzel 56 eingreift, das durch einen Antrieb 58 antreibbar ist, wobei der Antrieb 58 vorzugsweise einen Elektromotormiteinem Untersetzungsgetriebe umfaßt.

Auf dem Lagerzapfen 38 sitzt zwischen der Lagerwange 34 und der Lagerwange 36 ein als Ganzes mit 60 bezeichnetes Schwenkelement, welches drehfest mit einem Schwenkritzel 62 verbunden ist, das seinerseits durch ein Ritzel 64 antreibbar ist, um eine Schwenkbewegung des Schwenkelements 60 um die Schwenkachse 22 einzuleiten. Hierzu ist das Ritzel 64 durch einen Schwenkantrieb 66 angetrieben, welcher vorzugsweise ebenfalls einen Elektromotor mit einem Untersetzungsgetriebe umfaßt.

Ferner trägt das Schwenkelement 60 auf seiner der Lagerwange 36 zugewandten Seite einen mit ersten Formschlußelementen 70 versehenen Träger 72, welcher im einfachsten Fall als Verzahnungsring ausgebildet und konzentrisch zur Achse 40 des Lagerzapfens 38 angeordnet ist.

DerTräger72 istdabeidrehfestund in Richtung 52 unverschieblich mit dem Schwenkelement 60 verbunden, an welches außerdem der Kugelhals 10 angeformt ist.

Im einfachsten Fall sind der Kugelhals 10, das Schwenkelement 60 und der Träger 72 mit den ersten Formschlußelementen 70 als einstückiges Teil ausgebildet.

Ferner ist an der Lagerwange 36, und zwar auf ihrer dem Träger 72 mit den ersten Formschlußelementen 70 zugewandten Seite, ein zweite Formschlußelemente 80 aufweisender Träger 82 angeordnet, wobei die zweiten Formschlußelemente 80 den ersten Formschlußelementen 70 zugewandt sind und die ersten Formschlußelemente 70 und die zweiten Formschlußelemente 80 so ausgebildet sind, daß diese eine formschlüssige und spielfreie Verbindung miteinandereingehen können, um das Schwenkelement 60 spielfrei drehfest relativ zur Lagerwange 36 festzulegen.

Beispielsweise ist der Träger 82 als separates Teil ausgebildet, welches drehfest und in Richtung 52 unverschieblich mit der Lagerwange 36 verbunden ist. Es ist aber auch denkbar, den zweiten Träger 82 mit den zweiten Formschlußelementen 80 einstückig an die Lagerwange 36 anzuformen.

Außerdem ist der Lagerzapfen 38 auf einer dem Schwenkritzel 62 zugewandten Seite mit einer Schulter 84 versehen, welche in der Lage ist, das Schwenkritzel 62 zusammen mit dem Schwenkelement 60 in Richtung der Lagerwange 36 zu verschieben.

Darüberhinaus ist der Lagerzapfen 38 nochferner mit einer Schulter 86 versehen, welche beispielsweise durch einen aufgesetzten Ring 88 gebildet ist und dazu dient, das Schwenkelement 60 in Richtung der Lagerwange 34 zu verschieben.

Somit sind das Schwenkelement 60 und das Schwenkritzel 62 gemeinsam zwar drehbar, jedoch in Richtung 52 im wesentlichen unverschieblich auf dem Lagerzapfen 38 gelagert.

Zum drehfesten Festlegen der jeweiligen Schwenkstellung des Schwenkelements 60 relativ zur Lagerwange 36 und somit relativ zum Kraftfahrzeug wird nun der Antrieb 58 in Gang gesetzt, welcher über das Ritzel 56 das Antriebsritzel 54 antreibt und somit in der Lage ist, den Lagerzapfen 38 in Richtung 52 zu verschieben, und zwar entweder so, daß die Formschlußelemente 70 und 80 miteinander in Eingriff kommen, oder so, daß diese außer Eingriff kommen, wobei stets das Ritzel 64 und das Schwenkritzel 62 in Eingriff bleiben.

Sind die Formschlußelemente 70 und 80, wie in Fig. 4 dargestellt, außer Eingriff, so besteht die Möglichkeit, über den Schwenkantrieb 66 und das Ritzel 64 das Schwenkritzel 62 anzutreiben und somit das Schwenkelement 60 mitsamt dem Kugelhals 10 von der Arbeitsstellung A in die Ruhestellung R oder umgekehrt zu verschwenken, wobei die Arbeitsstellung A und die Ruhestellung R beispielsweise durch Endschalter erfaßbar sind, so daß bei Erreichen der jeweiligen Stellung ein Stillsetzen des Schwenkantriebs 66 und somit ein Festhalten der Schwenkstellung erfolgen kann.

Je nach dem ob der Kugelhals 10 in derArbeitsstellung A oder in der Ruhestellung R steht, besteht nun durch Betätigen des Antriebs 58 die Möglichkeit, die Formschlußelemente 70 und 80 miteinander in Eingriff zu bringen, wobei der Lagerzapfen 38 das Schwenkritzel 62 und das Schwenkelement 60 in Richtung der Lagerwange 36 beaufschlagt und diese soweit in Richtung der Lagerwange 36 schiebt, bis die ersten Formschlußelemente 70 spielfrei in die zweiten Formschlußelemente 80 eingedrückt sind.

Damit ist das Schwenkelement 60 mitsamt den Trägern 72 und 82 und den Formschlußelementen 70 und 80 gegen die Lagerwange 26 verspannt, wobei der Lagerzapfen 38 seinerseits durch das Außengewinde 48 in Richtung 52 in dem Innengewinde 50 in der Lagerwange 36 fixiert ist und somit dazu dient, die in axialer Richtung 52 desselben wirksamen Zugkräfte aufzubringen und damit eine spielfreie Fixierung des Schwenkelements 60 durch Verspannen gegen die Lagerwange 36 erreicht.

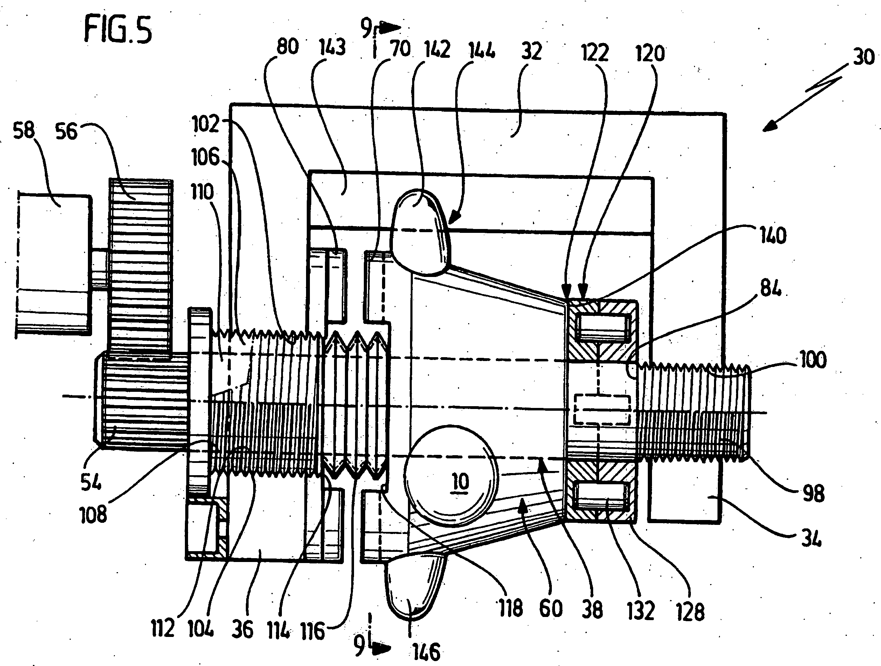

Bei einem zweiten Ausführungsbeispiel der Anhängekupplung, dargestellt in Fig. 5, sind diejenigen Teile, die mit denen des ersten Ausführungsbeispiels identisch sind, mit denselben Bezugszeichen versehen, so daß hinsichtlich der Ausführungen zu diesen Teilen vollinhaltlich auf das erste Ausführungsbeispiel Bezug genommen werden kann.

Im Gegensatz zum ersten Ausführungsbeispiel umfaßt der Lagerzapfen 38 mit seinem die Lagerwange 34 durchsetzenden Abschnitt ein Außengewinde 98, welches in ein Innengewinde 100 der Lagerwange 34 eingreift.

Ferner ist die Lagerwange 36 mit einem Innengewinde 102 versehen, welches mit einem Außengewinde 104 einer Einstellhülse 106 in Eingriff ist, die die Lagerwange 36 durchsetzt und einen Lagerdurchbruch 108 aufweist, welcher mit einer Umfangsfläche 110 des Lagerzapfens 38 zusammen ein Gleitlager 112 für den Lagerzapfen 38 bildet.

Die Einstellhülse 106 wirktdabei mit einer Stirnfläche 114 auf ein Tellerfederpaket 116, mit welchem eine der Stirnseite 114 zugewandte Stirnseite 118 des Schwenkelements 60 federelastisch beaufschlagbar ist, wobei sich durch Drehen der Einstellhülse 106 die Vorspannung des Tellerfederpakets 116 einstellen läßt.

Bei dem zweiten Ausführungsbeispiel ist im Gegensatz zum ersten Ausführungsbeispiel kein separater Antriebsmotor für die Einleitung und Durchführung der Schwenkbewegung des Schwenkelements 60 vorgesehen, sondern die Schwenkbewegung des Schwenkelements 60 ist von der Drehbewegung des Lagerzapfens 38 abgeleitet.

Aus diesem Grund ist als Schwenkantrieb 120 eine Rutschkupplung 122 vorgesehen, welche einen ersten Kupplungsring 128 aufweist, der drehfest mit dem Lagerbolzen 38 beispielsweise über einen Stift 130 verbunden ist und nockenähnliche Vorsprünge 132 trägt, welche in Vertiefungen 134 eines zweiten Kupplungsrings 136 eingreifen, der auf seiner den Vertiefungen 134 gegenüberliegenden Seite eine Reibfläche 138 trägt, die an einer dieser zugewandten Reibfläche 140 des Schwenkelements 60 anliegt.

Die Vertiefungen 134 sind dabei so ausgebildet, daß die Nocken 132 bezogen auf die Achse 40 um einen festgelegten Winkel α drehen können, so daß die zweite Kupplungsscheibe 136 um den Winkel α relativ zur ersten Kupplungsscheibe 128 begrenzt drehbar ist.

Ferner ist das Schwenkelement 60 noch mit einem ersten Anschlagnocken 142 versehen, welcher an einer ersten am Schwenklagerkörper 30 vorgesehenen und sich parallel zur Schwenkachse 22 erstreckenden ersten Anschlagfläche 143 eines Anschlagstegs 144 dann anlegbar ist, wenn der Kugelhals beim Schwenken von der Ruhestellung in die Arbeitsstellung A die Arbeitsstellung erreicht hat. Ferner ist am Schwenkelement 60 ein zweiter Anschlagnocken 146 angeordnet, welcher bei Erreichen der Ruhestellung R an einer zweiten Anschlagfläche 145 des Anschlagstegs 144 anlegbar ist.

Da das Schwenkelement 60 bei dem Verschwenken des Kugelhalses 10 von der Arbeitsstellung A in die Ruhestellung R oder umgekehrt jeweils einen Schwenkwinkel von ungefähr 200° durchläuft, entfernt sich der Anschlagnocken 142 von der Anschlagfläche 145 bis zu einem Winkelabstand von ungefähr 200°, bei dessen Erreichen der Anschlagnocken 142 an der zweiten Anschlagfläche 145 zur Anlage kommt, um den Kugelhals 10 bei Erreichen der Ruhestellung R an einer weiteren Drehbewegung zu hindern, oder der zweite Anschlagnocken 146 bewegt sich von der zweiten Anschlagfläche 145 weg bis der erste Anschlagnocken 142 die erste Anschlagfläche 143 erreicht.

Darüber hinaus ist zur Fixierung des Kugelhalses 10 in der Ruhestellung R dem Anschlagsteg 144 noch eine Tasche 148 zugeordnet, in welche der an der zweiten Anschlagfläche 145 anliegende Anschlagnokken 146 durch eine Bewegung in Richtung der Lagerwange 34 eintreten kann, die dadurch erzeugt wird, daß bei der Schwenkbewegung des Schwenkelements 60 um die Schwenkachse 22 der Anschlagnocken 146 an der zweiten Anschlagfläche 145 anschlägt und somit das Schwenkelement 60 nicht mehr weiter drehen kann, wobei in dieser Schwenkstellung der Kugelhals 10 bereits die Ruhestellung R erreicht hat. Dadurch, daß aber der Antrieb 58 weiterläuft, erfolgt ein Weiterdrehen des Lagerzapfens 38, so daß durch das in das Innengewinde 100 eingreifende Außengewinde 98 eine Verschiebung des Lagerzapfens 38 in Richtung der Lagerwange 34 erfolgt und sich somit auch die Kupplungsringe 128 und 136 weiter in Richtung der Lagerwange 34 bewegen, so daß aufgrund der Wirkung des Federpakets 116 auch eine Bewegung des Schwenkelements 60 in Richtung der Lagerwange 34 erfolgt und somit eine Verschiebung des zweiten Anschlagnockens 146 in Richtung der Lagerwange 34 und somit ein Eintauchen desselben in die Tasche 148, beispielsweise so lange, bis der Anschlagnocken 146 an einer Grundfläche 149 der Tasche 148 anliegt und durch das Tellerfederpaket 116 an diesem anliegend gehalten wird.

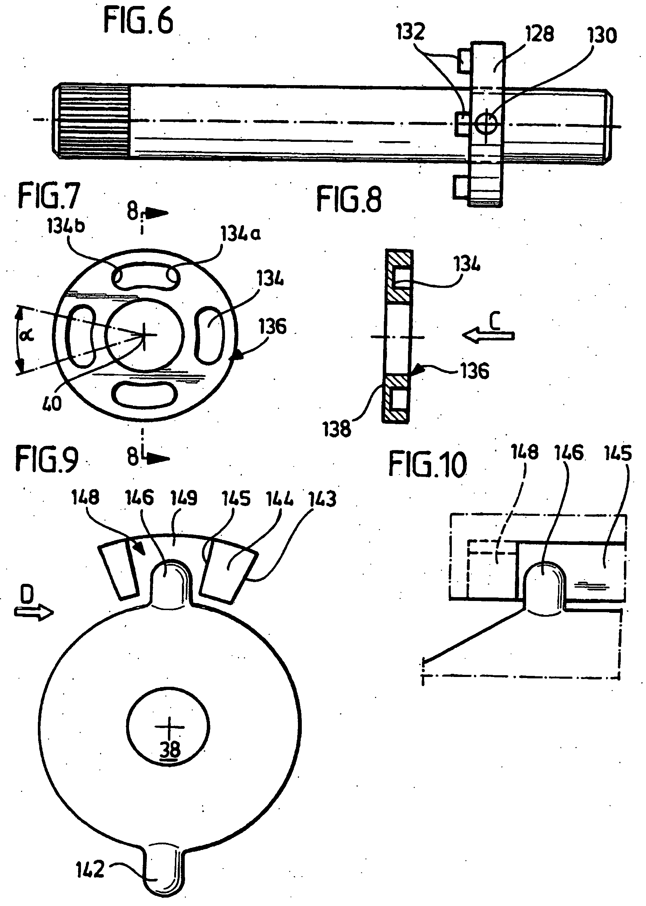

Die Tasche 148 führt nun zu einer formschlüssigen Festlegung des Schwenkelements 60 in der Ruhestellung R gegen eine Drehung um die Schwenkachse 22 und somit zu einerformschlüssigen Fixierung des Kugelhalses 10 in der Ruhestellung R, wie in Fig. 9 und 10 dargestellt.

Das zweite Ausführungsbeispiel der Anhängekupplung funktioniert nun folgendermaßen.

So lange die Formschlußelemente 70 und 80 nicht miteinander in Eingriff stehen, werden die Reibfläche 140 des Schwenkelements 60 und die Reibfläche 138 des zweiten Kupplungsrings 136 durch das Tellerfederpaket 116 in Anlage gehalten, da dieses auf die Stirnfläche 118 des Schwenkelements 60 einwirkt und das Schwenkelement 60 auf dem Lagerbolzen 38 frei drehbar und in Richtung 52 verschiebbar gelagert ist. Dadurch hält das Tellerfederpaket 116, dessen Vorspannung durch die Einstellhülse 106 festlegbar ist, stets die Reibflächen 140 und 138 in Anlage aneinander.

Ferner besteht bei nicht aneinandergleitenden Reibflächen 138 und 140, abgesehen von der relativen Drehbarkeit der ersten Kupplungsscheibe 128 relativ zur zweiten Kupplungsscheibe 136 um den Winkel α, eine drehfeste Verbindung über die Kupplungsscheiben 136 und 128 mit dem Lagerzapfen 38, aufgrund der drehfesten Verbindung der ersten Kupplungsscheibe 128 mit dem Lagerzapfen 38. Dadurch wird bei einer Drehung des Lagerzapfens 38 mittels des Antriebs 58 über das Ritzel 56 und das Antriebsritzel 54 eine Drehung des Schwenkelements 60 bewirkt, sofern diese nicht durch den Anschlagnocken 142 oder die Formschlußelemente 70 und 80 behindert ist.

Steht nun der Kugelhals 10 in Ruhestellung R und wird der Antrieb 58 eingeschaltet, so bewirkt eine Drehung des Lagerzapfens 38 um die Achse 40 aufgrund von dessen in das Innengewinde 100 eingreifendem Außengewinde 98 eine Verschiebung des Schwenkelements 60 in Richtung 52 so lange, bis der zweite Anschlagnocken 146 die Tasche 148 verlassen hat und anschließend ein Schwenken des Kugelhalses 10 von der Ruhestellung R in Richtung der Arbeitsstellung bei gleichzeitiger Verschiebung der Kupplungsscheiben 128 und 136 mitsamt dem Schwenkelement 60 in Richtung der Lagerwange 36, so lange, bis der vorgesehene Winkel von ungefähr 200° durchlaufen ist und der erste Anschlagnocken 142 an der ersten Anschlagfläche 144 zur Anlage kommt.

Dabei ist das Gewinde 98 des Lagerbolzens 38 so relativ zum Innengewinde 100 eingestellt, daß in diesem Fall nach wie vor noch die Formschlußelemente 70 und 80 außer Eingriff stehen.

In dem Moment, in dem der Anschlagnocken 140 durch Anliegen an der Anschlagfläche 144 die Schwenkbewegung des Schwenkelements 60 und des Kugelhalses 10 unterbricht, führt ein Weiterdrehen des Lagerbolzens 38 mittels des Antriebs 58 zu einem Durchrutschen der Rutschkupplung 122, wobei die Nocken 132 in den Vertiefungen 134 an dem in Drehrichtung vorderen Wand 134a derselben anliegen.

Durch das Weiterdrehen des Lagerzapfens 38 erfolgt aufgrund des in dem Innengewinde 100 eingreifenden Außengewindes 98 eine weitere Verschiebung des Schwenkelements 60 in Richtung der Lagerwange 36, und zwar so lange, bis die Formschlußelemente 70 und 80 miteinander in Eingriff kommen und durch den Lagerzapfen 38 gegeneinander verspannt sind.

In dieser Stellung sind das Schwenkelement 60 und der Kugelhals 10 in der Arbeitsstellung drehfest und spielfrei an dem Schwenklagerkörper 30 fixiert.

Soll nun ein Lösen der ineinander eingreifenden Formschlußelemente 70 und 80 erfolgen, so wird der Antrieb 58 so angesteuert, daß der Lagerbolzen 38 in umgekehrter Richtung gedreht wird. In diesem Fall sorgt das in das Innengewinde 100 in der Lagerwange 34 eingreifende Außengewinde 98 dafür, daß das Schwenkelement 60 sich von der Lagerwange 36 und somit dem zweiten Formschlußelement 80 weg bewegt, so lange, bis die Formschlußelemente 70 und 80 außer Eingriff kommen. Während dieser Zeit gleiten die Reibflächen 138 und 140 relativ zueinander.

Die Vertiefungen 134 und die relative Drehbeweglichkeit der ersten Kupplungsscheibe 128 zur zweiten Kupplungsscheibe 136 haben nun den Vorteil, daß beim Beginn der Drehbewegung des Lagerzapfens 38 bei noch ineinander eingreifenden und miteinander verspannten Formschlußelementen 70 und 80 die Kraft, die zum Verspannen der Formschlußelemente 70 und 80 über die Kupplungsscheiben 128 und 136 auf das Schwenkelement 60 wirkt, nicht zur Erhöhung der Haftreibung zwischen der Reibfläche 138 und der Reibfläche 140 beiträgt, da zu Beginn der Drehung des Lagerzapfens 38 die Nocken 132 die Möglichkeit haben, sich um den Winkelabstand α von der Wand 134a der Vertiefungen 134 bis zur Wand 134b zu bewegen, so daß der zweite Kupplungsring 136 aufgrund der Haftreibung relativ zum Schwenkelement 60 zunächst stehen bleiben kann, während sich der erste Kupplungsring 128 bereits um den Winkel α dreht. Dieser Winkel α reicht aus, um durch das in das Innengewinde 100 eingreifende Außengewinde 98 bereits eine Relativverschiebung des ersten Kupplungsrings 128 in Richtung der Lagerwange 34 zu erreichen, und zur Reduktion der Kraft auf die Reibflächen 138 und 140 beizutragen, so daß letztlich im wesentlichen die Vorspannung des Tellerfederpakets 116 wiederum für die Kraft zwischen den Reibflächen 138 und 140 maßgebend ist und somit die Haftreibung durch Drehmomente in der üblichen, vorgesehenen Größenordnung überwunden werden kann.

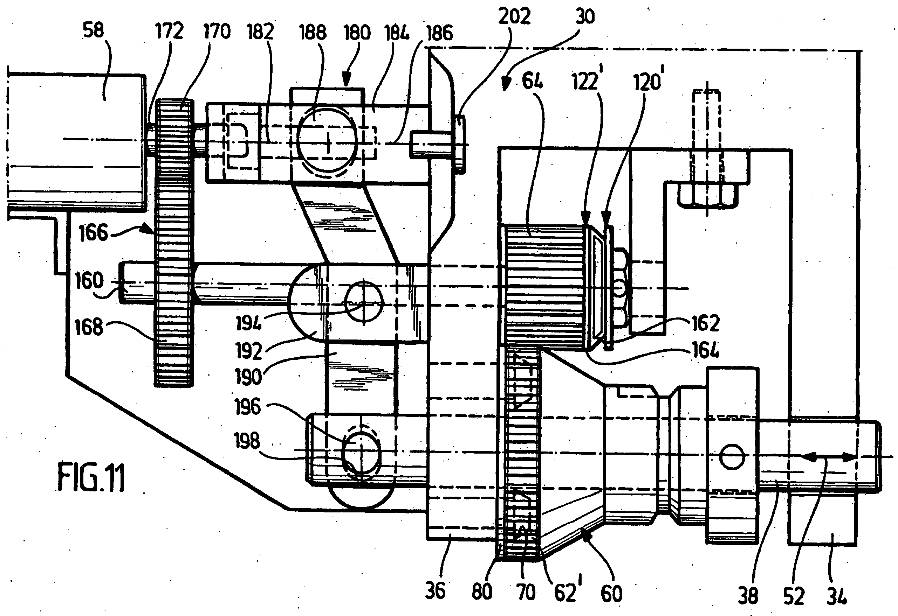

Bei einem dritten Ausführungsbeispiel, dargestellt in Fig. 11, sind diejenigen Elemente, die mit den voranstehenden Ausführungsbeispielen identisch sind, mit denselben Bezugszeichen versehen, so daß hinsichtlich der Funktion derselben auf die Ausführungen zu den voranstehenden Ausführungsbeispielen vollinhaltlich Bezug genommen werden kann.

Im Gegensatz zum ersten Ausführungsbeispiel ist das Schwenkelement 60 im Bereich seines größten Durchmessers mit einer Verzahnung versehen und bildet somit mit diesem mit der Verzahnung versehenen Bereich selbst das Ritzel 62', das mitdem Ritzel 64 in Eingriff ist, welches zum Antrieb des Schwenkelements 60 für die Schwenkbewegung zwischen der Arbeitsstellung A und der Ruhestellung R dient.

Im Gegensatz zum ersten Ausführungsbeispiel ist allerdings in Anlehnung an das zweite Ausführungsbeispiel das Ritzel 64 nicht über einen eigenen Antrieb angetrieben, sondern mittels eines Schwenkantriebs 120', dereine Rutschkupplung 122' umfaßt, die zwischen einer in der Lagerwange 36 gelagerten Antriebswelle 160 und dem Ritzel 64 wirksam ist und beispielsweise mit einer Reibscheibe 162 auf eine Stirnfläche 164 des Ritzels 64 wirkt.

Ferner ist die Antriebswelle 160 durch ein Zahnradgetriebe 166 angetrieben, welches zwei Zahnräder 168 und 170 umfaßt, wobei das Zahnrad 168 auf der Antriebswelle 160 sitzt und das Zahnrad 170 auf einer Welle 172 des Antriebs 58.

Die Welle 172 des Antriebs 58 treibt gleichzeitig noch einen als Ganzes mit 180 bezeichneten Stellantrieb, welcher eine Gewindespindel 182 umfaßt, die in einem Spindellagereinheit 184 um ihre Spindelachse 186 drehbar jedoch in Richtung ihrer Spindelachse 186 axial unverschieblich gelagert ist.

Die Gewindespindel 182 durchsetzt dabei eine Spindelmutter 188, welche verschieblich in dem Spindellagereinheit 184 gelagert ist und durch Verdrehen der Spindel 182 in Richtung der Spindelachse 186 verschiebbar ist.

Die Spindelmutter 188 wirkt dabei auf einen Umlenkhebel 190, welcher in einem Zwischenlager um eine Kippachse 194 kippbar gelagert ist.

An dem Hebel 190 ist ferner ein Betätigungselement 196 angeordnet, welches beispielsweise als Stift ausgebildet ist, und ein Auge 198 im Lagerzapfen 38 durchsetzt.

Das Auge 198 ist beispielsweise auf einer dem Schwenkelement 60 gegenüberliegenden Seite der Lagerwange 36 im Lagerzapfen 38 angeordnet.

Wird nun durch Bewegen der Spindelmutter 188 mittels der Spindel 182 der Hebel 190 gekippt, so läßt sich damit der Lagerzapfen 38 in der Richtung 52 verschieben, um die Formschlußelemente 70 und 80 miteinander in Eingriff oder außer Eingriff zu bringen.

Dabei ist das Schwenkelement 60 frei drehbar, jedoch in Richtung 52 unverschieblich auf dem Lagerzapfen 38 gelagert, und bleibt aufgrund der Tatsache, daß das Ritzel 64 und das Schwenkritzel 62' unabhängig von der Verschiebung des Schwenkelements 60 in Richtung 52 in Eingriff stehen, stets antreibbar.

Um außerdem eine einfache Möglichkeit der Notentriegelung zu erhalten, ist die Spindellagereinheit 184 als Ganzes lösbar an dem Schwenklagerkörper 30, beispielsweise mittels einer Schraube 202 gehalten.

Zum Notbetrieb, beispielsweise bei einem defekten Antrieb 58 oder defekter Stromversorgung des Antriebs 58, wird somit einerseits der Antrieb 58 mitsamt der Welle 172 und dem Zahnrad 170 abgenommen. Danach läßt sich durch Lösen der Schraube 202 die gesamte Spindellagereinheit 184 von dem Schwenklagerkörper 130 lösen und damit der Hebel 190 soweit kippen, daß eine Verschiebung des Schwenklagers 60 mitsamt dem Lagerzapfen 38 in Richtung der Lagerwange 34 erfolgt und somitdie Formschlußelemente 70 und 80 außer Eingriff bringbar sind. In dieser Stellung läßt sich dann manuell der Kugelhals 10 zwischen der Arbeitsstellung A und der Ruhestellung R hin und herverschwenken und nachfolgend fixieren, beispielsweise in der Arbeitsstellung A dadurch, daß die Spindellagereinheit 184 wiederum mit der Schraube 202 am Schwenklagerkörper 30 fixiert wird.

In gleicher Weise wie beim zweiten Ausführungsbeispiel lassen sich ein Anschlagelement und Anschlagnocken vorsehen, die die Schwenkbewegung des Schwenkelements 60 in der Arbeitsstellung und in der Ruhestellung begrenzen, wobei diese im Zusammenhang mit dem dritten Ausführungsbeispiel nicht nochmals im Detail beschrieben sind.

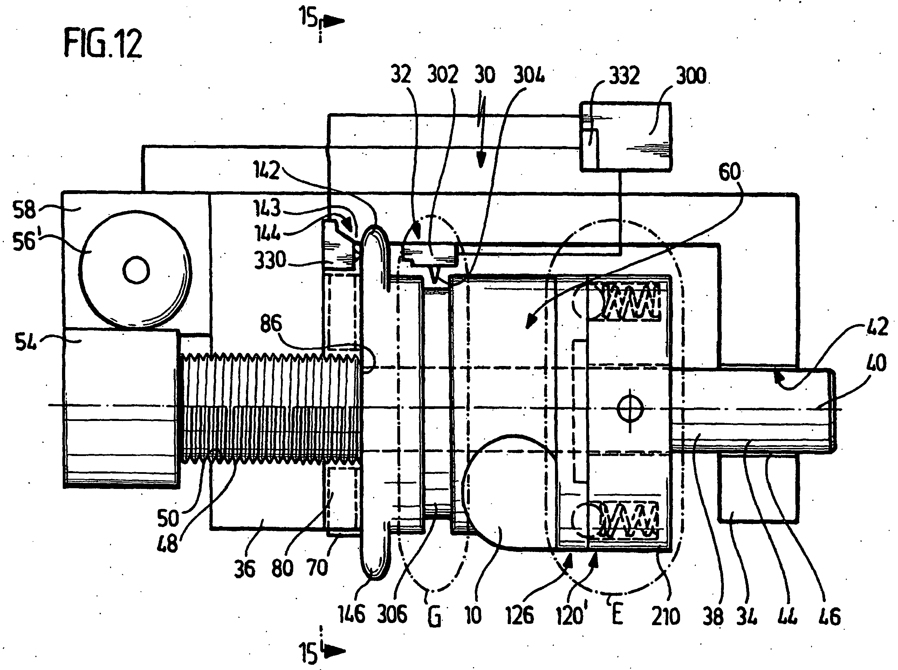

Bei einem vierten Ausführungsbeispiel, dargestellt in Fig. 12, sind diejenigen Teile, die mit denen des ersten und zweiten oder dritten Ausführungsbeispiels identisch sind, mit denselben Bezugszeichen versehen, so daß hinsichtlich der Beschreibung derselben vollinhaltlich auf das erste und das zweite Ausführungsbeispiel Bezug genommen werden kann.

Bei dem vierten Ausführungsbeispiel ist die Drehbewegung für das Schwenkelement 60 ebenfalls von der Drehbewegung des Lagerzapfens 38 abgeleitet, wobei dieser, wie beim ersten Ausführungsbeispiel beschrieben, mittels seines Außengewindes 48 in einem Innengewinde 50 der Lagerwange 36 drehbar und in Richtung 52 verschiebbar ist.

Zum Antrieb des Lagerzapfens 38 ist allerdings anstelle des Ritzels 56 eine Schnecke 56' vorgesehen, welche somit mit dem Antriebsritzel 54 gemeinsam ein selbstsperrendes Getriebe bildet.

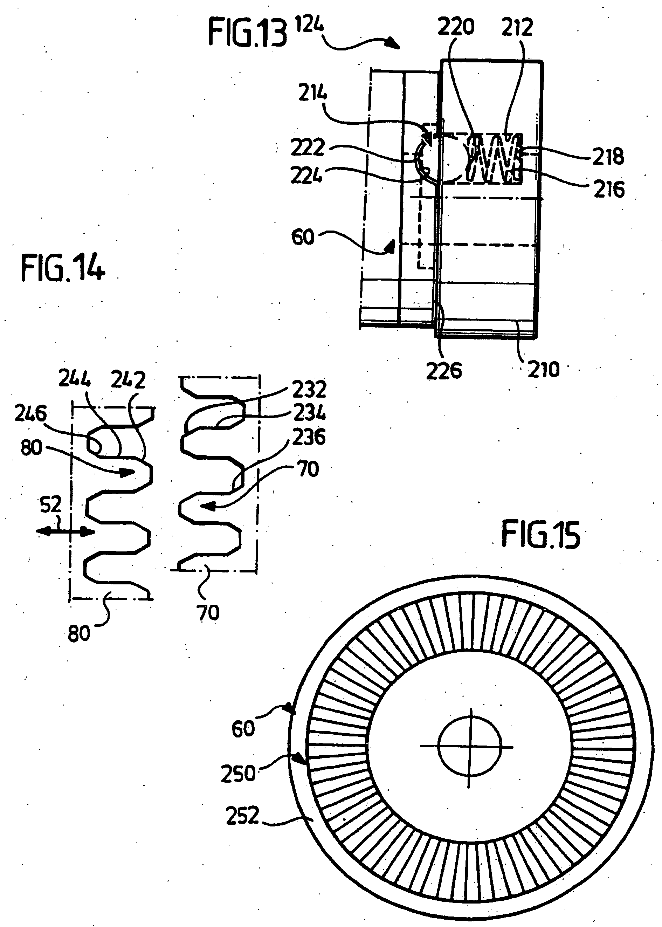

Darüber hinaus ist der Schwenkantrieb 120' nicht mit einer Rutschkupplung sondern einer Rastkupplung 126 versehen. Hierzu ist mit dem Lagerzapfen 38 eine drehfest verbundene Kupplungsscheibe 210 vorgesehen, in welcher, wie in Fig. 13 noch mal vergrößert dargestellt, Führungskanäle 212 für Rastkörper 214, vorzugsweise Rastkugeln vorgesehen sind, wobei in den Führungskanälen 212 jeweils noch eine Druckfeder 216 vorgesehen ist, die sich einerseits auf einem Boden 218 des jeweiligen Führungskanals 212 abstützt und andererseits eine dem Boden 218 zugewandte Rückseite 220 des Rastkörpers 214 beaufschlagt, welcher seinerseits mit einer Vorderseite 222 in eine kalottenähnliche Vertiefung 224 eingreift, die in einer dem Kupplungsring 210 zugewandten Stirnseite 226 des Schwenkelements 60 angeordnet ist.

Vorzugsweise ist eine Vielzahl derartiger kalottenähnlicher Vertiefungen 224 rotationssymmetrisch zur Achse 40 in der Stirnfläche 226 vorgesehen und es sind ebenfalls rotationssymmetrisch zur Achse 40 verteilte Nockenkörper 214 in dem Kupplungsring 210 vorgesehen.

Ferner liegt das Schwenkelement 60 in gleicher Weise wie beim ersten Ausführungsbeispiel an der Schulter 86 des Lagerzapfens 38 an, so daß das Schwenkelement 60 beim vierten Ausführungsbeispiel in Richtung 52 unverschiebbar zwischen der Schulter 86 und dem fest mit dem Lagerzapfen 38 verbundenen Kupplungsring 210 geführt ist, jedoch relativ zum Lagerzapfen 38 um die Achse 40 drehbar ist.

Als Formschlußelemente kommen bei dem vierten Ausführungsbeispiel, wie in Fig. 14 und 15 dargestellt, vorzugsweise Formschlußelemente 70 und 80 zum Einsatz, die einerseits frontseitig konisch zur Richtung 52 sich jeweils in Richtung des anderen Formschlußelements 70, 80 verjüngende Formschlußflächenbereich 232 bzw. 242 aufweisen, an welche sich ungefähr parallel zur Richtung 52 verlaufende Formschlußflächenbereiche 234 bzw. 244 anschließen, welche dann gefolgt sind durch den Formschlußflächenbereichen 232 bzw. 242 bezüglich der Formschlußflächenbereiche 234 bzw. 244 gegenüberliegende und sich in Richtung des jeweils anderen Formschlußelements 80, 70 erweiternde Formschlußflächenbereiche 236 bzw. 246.

Derartige Formschlußelemente sind dabei so ausgebildet, daß die Formschlußflächenbereiche 236 bzw. 246 die vorderen Formschlußflächenbereiche 242 bzw. 232 des jeweils anderen Formschlußelements 80, 70 spielfrei beim Einpressen der Formschlußelemente 70, 80 ineinander aufnehmen, während die Formschlußflächenbereiche 234 bzw. 244 eine Sicherung gegen ein Lösen der Formschlußelemente 70, 80 bei zu großem Drehmoment darstellen, da diese sich unabhängig von der Größe des Drehmoments aufgrund ihres zur Richtung 52 parallelen Verlaufs nicht lösen können.

Vorzugsweise sind beispielsweise die Formschlußelemente 70 an einem Ring 250 angeordnet, welcher auf einer der Lagerwange 36 zugewandten Stirnseite 252 des Schwenkelements 60 sitzt und mit dem Schwenkelement 60 sowohl drehfest als auch in Richtung 52 unverschieblich verbunden ist.

In gleicher Weisesinddie Formschlußelemente 80 auf einem zeichnerisch nicht dargestellten Ring angeordnet, wobei die beiden die Formschlußelemente 70, 80 tragenden Ringe als identische Ringe herstellbar sind.

Als Beispiel für eine Verzahnung ist beispielsweise eine Hirth-Verzahnung vorgesehen.

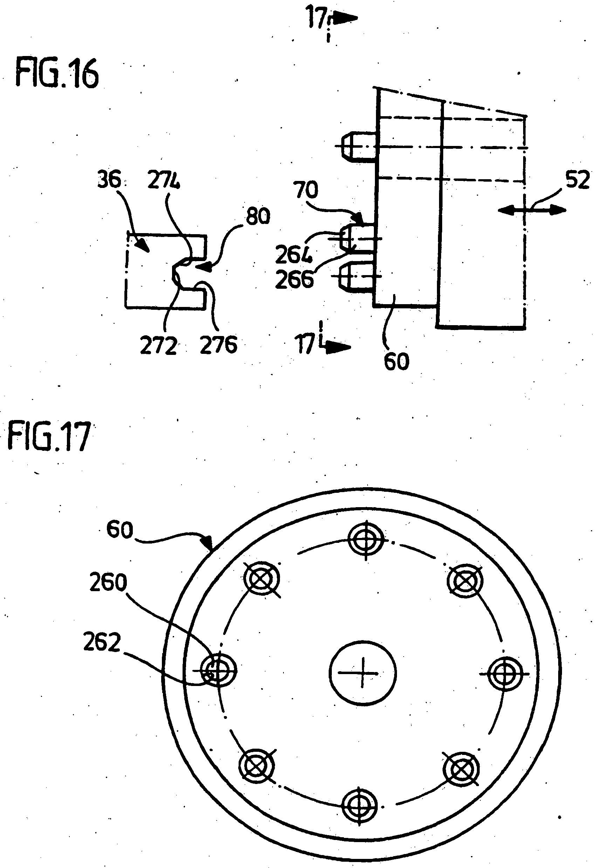

Bei einer Variante des vierten Ausführungsbeispiels, dargestellt in Fig. 16 und 17 sind die ersten Formschlußelemente 70 gegenüber dem vierten Ausführungsbeispiel vereinfacht ausgebildet.

Die ersten Formschlußelemente 70 sind dabei zylindrische Zapfen 260, welche in Bohrungen 262 im Schwenkelement 60 eingesetzt sind und an ihrer Stirnseite einen sich konisch verjüngenden Formschlußflächenbereich 264 tragen, während sich an diesen auf der dem Schwenkelement 60 zugewandten Seite ein parallel zur Richtung 52 verlaufender Formschlußflächenbereich 266 anschließt, der durch die zylindrische Mantelfläche der Stifte 260 gebildet ist.

Diezweiten Formschlußelemente 80 sind dabei als zylindrische Sacklöcher 270 ausgebildet, welche im Anschluß an einen Lochboden 272 sich konisch erweiternde Flächen 274 tragen, welche die konischen Formschlußflächenbereiche darstellen und die konischen Formschlußflächenbereiche 264 der Stifte 260 spielfrei aufnehmen. An diese konischen Formschlußflächenbereiche 274 schließen sich auf der dem Lochboden 272 gegenüberliegenden Seite zylindrische Wandflächen 276 der Sacklöcher 270 an, welche die parallel zur Richtung 52 verlaufenden Formschlußflächenbereiche bilden und die entsprechenden Formschlußflächenbereiche 266 der Stifte 260 aufnehmen.

Die Lösung gemäß der ersten Variante des vierten Ausführungsbeispiels hat den Vorteil, daß sich die Stifte 210 einfach herstellen und einfach in dem Schwenkelement 60 verankern lassen, wobei sich außerdem gleichzeitig auch die Sacklöcher 270 in der Lagerwange 36 einfach herstellen lassen.

Vorzugsweise sind die Formschlußelemente 70 und 80 bei der ersten Variante des vierten Ausführungsbeispiels in gleichen Winkelabständen um die Achse 40 und in gleichen radialen Abständen zu dieser angeordnet, so daß bezüglich der Achse 40 Rotationssymmetrie vorliegt.

Auch bei dem vierten Ausführungsbeispiel ist das Schwenkelement 60 mit zwei Anschlagnocken 142 und 146 versehen, die mit Anschlagflächen 143 und 145 des Anschlagelements 144 zusammenwirken. Diesbezüglich wird vollinhaltlich auf die Ausführungen zum zweiten Ausführungsbeispiel Bezug genommen.

Ferner ist auch der Anschlagfläche 145 eine Tasche 148 zur Fixierung des Schwenkelements in der Ruhestellung R zugeordnet.

Das vierte Ausführungsbeispiel funktioniert somit ähnlich dem zweiten Ausführungsbeispiel.

Steht der Kugelhals 10 beim vierten Ausführungsbeispiel in seiner Ruhestellung R, so steht der Anschlagnocken 142 ebenfalls in einem Winkelabstand von ungefähr 200° zur ersten Anschlagfläche 143.

In der Ruhestellung R wird der Kugelhals 10 ausschließlich von der Rastkupplung 126 gehalten.

Soll nun ein Verschwenken des Kugelhalses 10 in die Arbeitsstellung A erfolgen, so wird der Antrieb 58 eingeschaltet und der Lagerbolzen 38 gedreht, wobei das in das Innengewinde 58 in der Lagerwange 36 eingreifende Außengewinde 48 des Lagerbolzens 38 bei sich lösender Rastkupplung 126 zu einer linearen Verschiebung des Schwenkelements 60 von seiner maximal von der Lagerwange 36 entfernten und der Ruhestellung R entsprechenden Stellung, in welcherder Anschlagnokken 146 in die Tasche 148 eingreift, in eine der Lagerwange 36 näherliegende Stellung erfolgt, in welche die Rastkupplung 126 greift und das Schwenkelement 60 mit dem Lagerbolzen 38 verschwenkt bei gleichzeitigem Verschwenken des Kugelhalses 10, und zwar so lange, bis der Anschlagnocken 142 an der Anschlagfläche 143 anliegt, wobei dieses Anliegen dem Erreichen der Arbeitsstellung A des Kugelhalses 10 bezüglich seiner Schwenkbewegung um die Schwenkachse 22 entspricht. Bei dem gesamten Schwenken ist die Rastkupplung 126 in Eingriff, so daß die Schwenkbewegung des Kugelhalses 10 der Drehbewegung des Lagerzapfens 38 entspricht.

Das Anlegen des Anschlagnockens 142 an der Anschlagfläche 144 hat jedoch eine Verhinderung einer weiteren Drehbewegung des Schwenkelements 60 mit dem Kugelhals 10 zur Folge, so daß nunmehr die Rastkupplung 126 bei weiterem Drehen des Lagerzapfens 38 gelöst wird, wobei die Nockenkörper 214 aus den kalottenförmigen Vertiefungen 224 herausbewegt werden und über die Stirnseite 226 weglaufen, beispielsweise bis zur nächsten kalottenförmigen Vertiefung 224.

Dies erlaubt den Lagerzapfen 38, sich weiterzudrehen und die zunächst beim Anschlagen des Anschlagnockens 142 an der Anschlagfläche 144 noch nicht in Eingriff befindlichen Formschlußelemente 70, 80 durch Verschieben des Schwenkelements 60 in Richtung der Lagerwange 36 in Eingriff zu bringen, wobei der Lagerzapfen 38 schließlich die Formschlußelemente 70, 80 ineinandergepreßt und gegeneinander verspannt hält, so daß das Schwenkelement 60 und somit auch der Kugelhals drehfest und spielfrei an der Lagerwange 36 und somit an dem Schwenklagerkörper 30 festgelegt ist. Ist diese Stellung erreicht, kann auch der Antrieb 58 beispielsweise durch Erkennen des Überschreitens eines maximalen Drehmoments, abgeschaltet werden.

Soll die Verriegelung des Kugelhalses 10 in der Arbeitsstellung A gelöst werden, wird der Antrieb 58 umgeschaltet und der Lagerzapfen 38 in umgekehrter Richtung gedreht. Dies führt zunächst zu einem Verschieben des Schwenkelements 60 von der Lagerwange 36 weg, da die Formschlußelemente 70, 80 nach wie vor eine Drehung des Schwenkelements 60 verhindern. Erst wenn das Schwenkelement 60 soweit in Richtung 52 von der Lagerwange 36 weg verschoben ist, daß die Formschlußelemente 70 und 80 außer Eingriff kommen, kann wieder eine Drehbewegung des Schwenkelements 60 durch Greifen der Rastkupplung 126 erfolgen, diese erfolgt vorzugsweise jedoch synchron zum Lagerzapfen 38 nur dann, wenn die Nockenkörper 214 wieder in die kalottenähnliche Vertiefungen 224 eingreifen.

Zum Betrieb der erfindungsgemäßen Anhängekupplungen ist, wie exemplarisch im Zusammenhang mit dem vierten Ausführungsbeispiel in Fig. 12 dargestellt, eine Steuerung 300 vorgesehen, welche einerseits dazu dient, den Antrieb 58 anzusteuern und auch mit Strom zu versorgen.

Die Steuerung 300 fragtferner noch einen Sensor 302 ab, welcher mit einer Tastnase 304 in eine Detektionsnut 306 im Schwenkelement 60 eingreift.

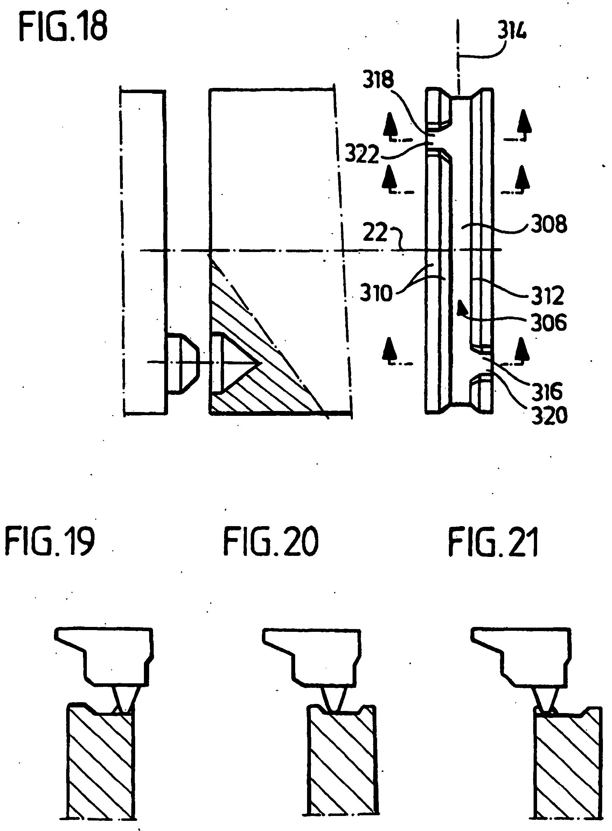

Die Detektionsnut 306 umfaßt, wie in Fig. 18 im Detail dargestellt, einen Mittelabschnitt 308, welcher zwischen zwei Nutwänden 310 und 312 verläuft, und jeweils in einen Querabschnitt 316 bzw. 318 übergeht, wobei der Querabschnitt 316 der Detektionsnut 306 in Richtung der Schwenkachse 22 in Form einer Ausnehmung 320 in der Nutwand 312 ausgebildet ist, während der Querabschnitt 318 als Ausnehmung 322 in der Nutwand 310 ausgebildet ist.

Sowohl die endseitigen Querabschnitte 316 und 318 sowie der Mittelabschnitt 308 der Detektionsnut 306 dienen zur Überwachung der korrekten Bewegung des Schwenkelements 60 beim Schwenken von der Ruhestellung R in die Arbeitsstellung A.

Steht beispielsweise das Schwenkelement 60 in der Arbeitsstellung A, so steht die Tastnase, wie in Fig. 19 dargestellt, in dem Querabschnitt 316 der Detektionsnut 306.

Wird nun von der Steuerung 300 der Antrieb 58 so angesteuert, daß ein Lösen des Schwenkelements 60 in der Arbeitsstellung A erfolgen soll, so führt dieswie bereits beschrieben - zunächst zu einer ausschließlichen linearen Verschiebung des Schwenkelements 60 weg von der Lagerwange 36 so lange, bis die Formschlußelemente 70 und 80 außer Eingriff kommen.

Der Mittelabschnitt 308 der Detektionsnut 306 ist nun so relativ zum Querabschnitt 316 so angeordnet, daß die Tastnase 304 gerade dann im Mittelabschnitt 308 steht, wenn die Formschlußelemente 70 und 80 außer Eingriff kommen und sich das Schwenkelement 60 zu drehen beginnt.

In diesem Fall steht die Tastnase 304 im Mittelabschnitt und kann sich somit längs des Mittelabschnitts 308 der Detektionsnut 306 bewegen, so daß eine Drehung des Schwenkelements 60 möglich ist, ohne daß die Tastnase 304 mit den Nutwänden 310 oder 312 kollidiert.

Dabei ist der Abstand zwischen den Nutwänden 310 und 312 so bemessen, daß auch die während des Schwenkens des Schwenkelements 60 von der Arbeitsstellung A in die Ruhestellung R zusätzlich erfolgende Linearverschiebung zu keiner Kollision der Tastnase 304 mit den Nutwänden 310 oder 312 führt.

Die Drehung des Schwenkelements 60 erfolgt so lange, bis die Tastnase 304 in dem Mittelabschnitt 308 ungefähr in Höhe des Querabschnitts 318 steht und der zweite Anschlagnocken 146 an der entsprechenden Anschlagfläche 154 anliegt, welche die Ruhestellung R definiert. In diesem Fall ist die Drehung des Schwenkelements 60 um die Schwenkachse 22 beendet und es erfolgt nur noch eine Linearverschiebung des Schwenkelements 60 und zwar weg von der Lagerwange 36 in Richtung der Lagerwange 34, so daß der Tastnocken 304 in den Querabschnitt 318 einfährt.

AusdervorstehendenBeschreibungergibtsich somit, daß die Detektionsnut 306 so ausgeführt ist, daß in allen Abschnitten keine Kollision mit der Tastnase 304 erfolgt, sofern das Schwenkelement 60 und somit auch der Kugelhals 10 die vorgesehenen Schwenkbewegungen um die Schwenkachse 22 und Linearbewegungen in Richtung der Schwenkachse 22 ausführen.

Das heißt, daß die Steuerung 300 das Signal des Tasters 302 als eine Art "Notaussignal" abfragt, denn eine Betätigung der Tastnase 304, beispielsweise durch die Nutwände 310 und 312 erfolgt nur dann, wenn die Bewegung des Schwenkelements 60 von der vorgesehenen Bewegungsform abweicht.

Wird beispielsweise die Schwenkbewegung des Kugelhalses 10 und somit auch die Schwenkbewegung des Schwenkelements 60 unterbrochen, so daß beispielsweise die Rastkupplung 126 auslöst, so führt dies dazu, daß zwar die Drehbewegung des Schwenkelements 60 unterbrochen wird, jedoch nicht die Linearverschiebung in Richtung der Schwenkachse 22. Dauertdie Unterbrechung der Schwenkbewegung an, so verbleibt die Tastnase 304 in dem Mittelabschnitt 308 und bei zunehmender Linearverschiebung in Richtung der Lagerwange 34 erfolgt irgendwann eine Kollision der Nutwand 310 mit der Tastnase 304 und somit ein Betätigen des Tasters 302.

Ist die Unterbrechung nur temporär, so erreicht trotzdem die Tastnase 304 bei ihrer Bewegung längs des Mittelabschnitts 308 nicht den Querabschnitt 318 ohne Kollision mit der Nutwand 310, da aufgrund der Unterbrechung der Schwenkbewegung des Schwenkelements 60 die Linearverschiebung in Richtung der Schwenkachse 22 ohne Schwenkbewegung fortgesetzt wurde, so daß die Tastnase 304 sich weiter als bei einer normalen Schwenkbewegung der Nutwand 310 annähert und somit vor Erreichen des Querabschnitts 318 mit der Nutwand 310 kollidiert.

In umgekehrter Weise überwacht die Tastnase 304 auch die Bewegung von der Ruhestellung R in die Arbeitsstellung A, wobei in diesem Fall bei einer Unterbrechung der Schwenkbewegung Kollisionen mit der Nutwand 312 auftreten.

Um ferner sicher gehen zu können, daß das Schwenkelement 60 mit den Formschlußelementen 70 wirklich in der Arbeitsstellung A in Eingriff mit den Formschlußelementen 80 ist, ist der Steuerung 300 noch ein weiterer Taster 330 zugeordnet, der beispielsweise an der Lagerwange 36 angeordnet ist und die Stellung des Schwenkelements 60 oder die Stellung des Formschlußelements 70 oder auch beispielsweise die Stellung des Anschlagnockens 142 dann abfragt, wenn diese in der Arbeitsstellung A stehen.

Damit ist die Steuerung 300 in der Lage durch ein positives Signal den ordnungsgemäß in der Arbeitsstellung verriegelnden Zustand des Schwenkelements 60 festzustellen.

Um außerdem den Elektromotorfürden Antrieb 58 rechtzeitig abschalten zu können, ist vorzugsweise in der Steuerung 300 eine Stromüberwachungsschaltung 332 vorgesehen, welche den Strom für den Elektromotor des Antriebs 58 überwacht und somit erkennt, wenn der Antrieb 58 aufgrund des Erreichens der Arbeitsstellung A bei ineinander verspannten Formschlußelementen 70 und 80 blockiert ist und somit der Strom ansteigt. Erfolgt eine derartige Blockierung des Antriebs 58 nach dem Signal des Tasters 330, welcher erkennt, da die Formschlußelemente 70 und 80 ordnungsgemäß in Eingriff sind, so weiß die Steuerung 300, daß der Motor 58 abgeschaltet werden kann.

Erfolgtjedoch ein derartiges Blockieren des Antriebs 58 ohne daß der Taster 330 das Signal für das Erreichen der Arbeitsstellung A gegeben hat, oder meldet der Taster 302 ein Signal und stellt somit eine Störung des Ablaufs der Schwenkbewegung fest, so kehrt die Steuerung 300 die Laufrichtung um und versucht die vorhergehende Endstellung, das heißt die vorhergehende Arbeitsstellung A oder Ruhestellung R zu erreichen.

Erfolgt bei diesem Versuch der Richtungsumkehr erneut ein Signal des Tasters 302 oder eine Blokkierung des Antriebs 58 so wird durch die Steuerung 300 eine erneute Richtungsumkehrvorgenommen und dann, wenn nach der dritten Richtungsumkehr wiederum ein Signal des Tasters 302 gegeben wird oder der Antrieb 58 blockiert wird, ein Stillsetzen und die Meldung einer Störung.

## Patentansprüche

1. Anhängekupplung für Kraftfahrzeuge, umfassend einen fahrzeugfest angeordneten Schwenklagerkörper (30), an welchem ein Schwenkelement (60) um eine Schwenkachse (22) schwenkbar gelagert ist, einen sich ausgehend vom Schwenkelement (60) erstreckenden Kugelhals (10), der an seinem dem Schwenkelement (60) abgewandten Ende eine Kupplungskugel (12) trägt und der durch eine Schwenkbewegung um die Schwenkachse zwischen einer Arbeitsstellung (A) und einer Ruhestellung (R) verschwenkbar ist, und eine Verriegelungsvorrichtung zur drehfesten formschlüssigen Festlegung des Schwenkelements (60) gegenüber dem Schwenklagerkörper (30),
**dadurch gekennzeichnet, dass** das Schwenkelement (60) mittels eines Lagerzapfens (38) an dem Schwenklagerkörper (30) gelagert ist und gegenüber dem Lagerzapfen (38) drehbar ist, dass das Schwenkelement (60) am Schwenklagerkörper (30) in Richtung seiner Schwenkachse (22) verschiebbar gelagert ist, dass durch Verschieben des Schwenkelements (60) in Richtung der Schwenkachse (22) das Schwenkelement (60) in eine gegenüber dem Schwenklagerkörper (30) schwenkbare Stellung und eine gegenüber dem Schwenklagerkörper durch Formschlusselemente (70, 80) drehfest festgelegte Stellung bringbar ist, in welcher das Schwenkelement (60) in der Arbeitsstellung (A) des Kugelhalses (10) mittels der Formschlusselemente (70, 80) drehfest gegenüber dem Schwenklagerkörper (30) festiegbar ist, dass das Schwenkelement (60) relativ zum Schwenklagerkörper (30) mittels der Formschlusselemente (70, 80) in zueinander entgegengesetzten Drehrichtungen um die Schwenkachse (22) festlegbar ist, dass das mindestens eine erste Formschlusselement (70) als zylindrischer Zapfen (260) ausgebildet und relativ zum Schwenkelement (60) drehfest und feststehend angeordnet ist, dass das mindestens eine zweite Formschlusselement (80) als zylindrisches Sackloch (270) ausgebildet und mit dem Schwenklagerkörper (30) drehfest verbunden sowie relativ zu diesem unbeweglich fixiert ist, dass das erste Formschlusselement (70) und das zweite Formschlusselement (80) mit dem jeweils anderen Formschlusselement (80, 70) durch das Verschieben des Schwenkelements (60) in Richtung der Schwenkachse (22) in Eingriff bringbar sind und dass mindestens eines der Formschlusselemente (70, 80) sich in Eingreifrichtung verjüngende Formschlussflächen (264, 274) aufweist, welche zur drehfesten Festlegung des Schwenkelements (60) relativ zum Schwenklagerkörper (30) dienen und an welchen das jeweils andere Formschlusselement (80, 70) zur Drehfestlegung in den beiden einander entgegengesetzten Drehrichtungen anliegt.

2. Anhängekupplung nach Anspruch 1, **dadurch gekennzeichnet, dass** sich der Kugelhals (10) in der Arbeitsstellung (A) in einer Längsmittelebene (14) des Kraftfahrzeugs (16) erstreckt und in der Ruhestellung (R) quer zu der Längsmittelebene (14) erstreckt.

3. Anhängekupplung nach Anspruch 1 oder 2, **dadurch gekennzeichnet, dass** die sich in Eingreifrichtung verjüngenden Flächen (264, 274) konisch aufeinander zu verlaufen.

4. Anhängekupplung nach einem der Ansprüche 1 bis 3, **dadurch gekennzeichnet, dass** die Formschlusselemente (70, 80) parallel zur Eingreifrichtung verlaufende Formschlussflächen (266, 276) aufweisen.

5. Anhängekupplung nach Anspruch 4, **dadurch gekennzeichnet, dass** die in Eingreifrichtung parallel verlaufenden Formschlussflächen (266, 276) sich an die sich in Eingreifrichtung verjüngenden Formschlussflächen (264, 274) anschließen.

6. Anhängekupplung nach einem der voranstehenden Ansprüche, **dadurch gekennzeichnet, dass** die Formschlusselemente (70, 80) in ihrer das Schwenkelement (60) relativ zum Schwenklagerkörper (30) drehfest fixierenden Stellung mittels eines Keilgetriebes (48, 50; 98, 100; 182, 188) verspannbar sind.

7. Anhängekupplung nach Anspruch 6, **dadurch gekennzeichnet, dass** die Formschlusselemente (70, 80) zwischen dem Schwenkelement (60) und einer Lagerwange (36) des Schwenklagerkörpers (30) angeordnet sind und dass das Keilgetriebe (48, 50; 182 188) einerseits auf das Schwenkelement (60) und andererseits auf die Lagerwange (36) wirkt.

8. Anhängekupplung nach Anspruch 7, **dadurch gekennzeichnet, dass** das Keilgetriebe (48, 50; 182, 188) unmittelbar an der Lagerwange (36) angreift.

9. Anhängekupplung nach einem der Ansprüche 6 bis 8, **dadurch gekennzeichnet, dass** das Keilgetriebe durch zwei ineinandergreifende Gewinde (48, 50; 98, 100; 182, 188) gebildet ist.

10. Anhängekupplung nach einem der voranstehenden Ansprüche, **dadurch gekennzeichnet, dass** zur Erzeugung der Bewegung des Schwenkelements (60) in Richtung der Schwenkachse (22) relativ zum Schwenklagerkörper (30) ein Keilgetriebe (48, 50; 98, 100; 182; 188) vorgesehen ist.

11. Anhängekupplung nach Anspruch 10, **dadurch gekennzeichnet, dass** dasselbe Keilgetriebe (48, 50; 98, 100; 182, 188) einerseits zum Verschieben des Schwenkelements (60) relativ zum Schwenklagerkörper (30) und andererseits zum Verspannen der Formschlusselemente (70, 80) dient.

12. Anhängekupplung nach einem der voranstehenden Ansprüche, **dadurch gekennzeichnet, dass** über eine Verschiebung des Lagerzapfens (38) in Richtung der Schwenkachse (22) eine Verschiebung des Schwenkelements (60) zwischen den einzelnen Stellen erreichbar ist.

13. Anhängekupplung nach Anspruch 12, **dadurch gekennzeichnet, dass** über den Lagerzapfen (38) die Formschlusselemente (70, 80) zur drehfesten Festlegung des Schwenkelements (60) miteinander verspannbar sind.

14. Anhängekupplung nach einem der voranstehenden Ansprüche, **dadurch gekennzeichnet, dass** der Lagerzapfen (38) drehbar im Schwenklagerkörper (30) gelagert ist und über den Lagerzapfen (38) eine Schwenkbewegung des Schwenkelements (60) relativ zum Schwenklagerkörper (30) bewirkt wird, und dass zwischen dem drehbar angetriebenen Lagerzapfen (38) und dem Schwenkelement (60) eine drehmomentauslösende Kupplung (122, 124) vorgesehen ist.

15. Anhängekupplung nach einem der voranstehenden Ansprüche, **dadurch gekennzeichnet, dass** das Schwenkelement (60) in Richtung der Schwenkachse (22) zwischen einer gegenüber dem Schwenklagerkörper (30) verschwenkbaren Stellung und einer Haltestellung bewegbar ist, in welcher das Schwenkelement (60) am Schwenklagerkörper (30) drehfest fixiert ist.

16. Anhängekupplung nach Anspruch 15, **dadurch gekennzeichnet, dass** das Schwenkelement (60) sowohl in der Ruhestellung (R) als auch in der Arbeitsstellung (A) des Kugelhalses (10) in der einen Haltestellung steht.

17. Anhängekupplung nach Anspruch 15, **dadurch gekennzeichnet, dass** das Schwenkelement (60) in der Ruhestellung (R) des Kugelhalses (10) in einer ersten Stellung steht, dass das Schwenkelement (60) von der ersten Stellung in die verschwenkbare Stellung und von der verschwenkbaren Stellung in die Haltestellung, in welcher der Kugelhals (10) in der Arbeitsstellung (A) steht, bringbar ist.

18. Anhängekupplung nach Anspruch 17, **dadurch gekennzeichnet, dass** die erste Stellung ebenfalls eine Haltestellung ist in welcher das Schwenk-element (60) drehfest gegenüber dem Schwenklagerkörper (30) fixiert ist.

19. Anhängekupplung nach Anspruch 18, **dadurch gekennzeichnet, dass** das Schwenkelement (60) in der ersten Stellung durch Formschluss relativ zum Schwenklagerkörper (30) fixiert ist.

20. Anhängekupplung nach einem der voranstehenden Ansprüche, **dadurch gekennzeichnet, dass** das Schwenkelement mittels eines motorischen Antriebs (58) in Richtung der Schwenkachse (22) zwischen den einzelnen Stellungen bewegbar ist.

21. Anhängekupplung nach Anspruch 20, **dadurch gekennzeichnet, dass** der motorische Antrieb (58) das Keilgetriebe antreibt.

22. Anhängekupplung nach einem der voranstehenden Ansprüche, **dadurch gekennzeichnet, dass** das Schwenkelement (60) in seiner relativ zum Schwenklagerkörper (30) verschwenkbaren Stellung mittels eines motorischen Antriebs (66, 58) zwischen einer Arbeitsstellung (A) und einer Ruhestellung (R) verschwenkbar ist.

23. Anhängekupplung nach Anspruch 22, **dadurch gekennzeichnet, dass** der motorische Antrieb (66) ausschließlich für die Schwenkbewegung des Schwenkelements (60) vorgesehen ist.

24. Anhängekupplung nach Anspruch 22, **dadurch gekennzeichnet, dass** ein Schwenkantrieb (120) für das Schwenkelement (60) von einem motorischen Antrieb (58) abgeleitet ist, welcher die Verschiebung des Schwenkelements (60) in Richtung der Schwenkachse (22) zwischen den einzelnen Stellungen bewirkt.

25. Anhängekupplung nach Anspruch 24, **dadurch gekennzeichnet, dass** der Schwenkantrieb (120) mit dem motorischen Antrieb für die Bewegung des Schwenkelements (60) in Richtung der Schwenkachse (22) über eine drehmomentauslösende Kupplung (122, 124) gekoppelt ist.

26. Anhängekupplung nach einem der voranstehenden Ansprüche **dadurch gekennzeichnet, dass** die Verriegelungsvorrichtung ein erstes Formschlusselement (70) und ein zweites Formschlusselement (80) umfasst, die durch einen ersten motorischen Antrieb (58) in eine das Schwenkelement (60) relativ zum Schwenklagerkörper (30) drehfest festlegende Stellung bringbar sind, und dass das Schwenkelement (30) mittels eines zweiten motorischen Antriebs (66) zwischen der Arbeitsstellung (A) und der Ruhestellung (R) verschwenkbar ist.

27. Anhängekupplung nach einem der voranstehenden Ansprüche, **dadurch gekennzeichnet, dass** diese eine Steuerung (300) umfasst und daß mit der Steuerung (300) mittels mindestens eines Sensors (302) die Bewegungen des Schwenkelements (60) von der Arbeitsstellung (A) in die Ruhestellung (R) und umgekehrt überwachbar sind.

28. Anhängekupplung nach Anspruch 27, **dadurch gekennzeichnet, dass** die Steuerung (300) die Schwenkbewegung des Schwenkelements (60) dann unterbricht, wenn die Steuerung (300) eine Abweichung der Bewegung des Schwenkelements (60) von der vorgegebenen Bewegungsform erkennt.

29. Anhängekupplung nach Anspruch 27 oder 28, **dadurch gekennzeichnet, dass** die einzelnen Stellungen des Schwenkelements (60) mittels des Sensors (302) detektierbar sind.

30. Anhängekupplung nach Anspruch 29, **dadurch gekennzeichnet, dass** mittels des Sensors (302) die Bewegung des Schwenkelements (60) dadurch erfassbar ist, dass dieser eine Kulissenbahn (306) abtastet.

31. Anhängekupplung nach einem der Ansprüche 27 bis 30, **dadurch gekennzeichnet, dass** die Steuerung (300) eine Stromüberwachung (332) für den motorischen Antrieb (58) aufweist und dass bei Überschreiten eines vorgegebenen Stroms die Steuerung (300) den Antrieb (58) unterbricht.

## Claims

1. A trailer coupling for motor vehicles comprising a pivot bearing body (30) which is rigidly attached to the vehicle and upon which there is mounted a pivotal element (60) that is pivotal about a pivotal axis (22), a ball neck (10) which extends from the pivotal element (60) and which carries a coupling ball (12) at the end thereof remote from the pivotal element (60) and which is pivotable by a pivotal movement about the pivotal axis between an operative position (A) and a rest position (R), and a locking device for non-rotatably fixing the pivotal element (60) relative to the pivot bearing body (30) in interlocking manner, **characterised in that** the pivotal element (60) is mounted by means of a bearing pin (38) on the pivot bearing body (30) and is rotatable relative to the bearing pin (38), **in that** the pivotal element (60) is mounted to be displaceable on the pivoted bearing body (30) along its pivotal axis (22), **in that** by displacement of the pivotal element (60) along the pivotal axis (22), the pivotal element (60) is moveable into a position wherein it is pivotal relative to the pivot bearing body (30) and into a position wherein it is fixed relative to the pivot bearing body in mutually non-rotatable manner by means of interlocking elements (70, 80), in which, in the operative position (A) of the ball neck (10), the pivotal element (60) can be fixed in mutually non-rotatable manner relative to the pivot bearing body (30) by means of the interlocking elements (70, 80), **in that** the pivotal element (60) is fixable relative to the pivot bearing body (30) in mutually opposite directions of rotation about the pivotal axis (22) by means of the interlocking elements (70, 80), **in that** the at least one first interlocking element (70) is formed as a cylindrical pin (260) and is arranged non-rotatably and fixed relative to the pivotal element (60), **in that** the at least one second interlocking element (80) is formed as a cylindrical blind hole (270) and is connected non-rotatably with the pivot bearing body and is fixed immovably relative thereto, **in that** the first interlocking element (70) and the second interlocking element (80) can be brought into engagement with the respective other interlocking element (80, 70) by the displacement of the pivotal element (60) along the pivotal axis (22) and **in that** at least one of the interlocking elements (70, 80) comprises interlocking surfaces (264, 274) which taper in the direction of engagement, which serve to non-rotatably fix the pivotal element (60) relative to the pivotal bearing body (30) and against which abuts the respective other interlocking element (80, 70) for rotary fixation in the two mutually opposite directions of rotation.

2. A trailer coupling in accordance with claim 1, **characterised in that** in the operative position (A) the ball neck (10) extends in a longitudinal central plane (14) of the motor vehicle (16) and in the rest position (R) extends transversely to the longitudinal central plane (14).

3. A trailer coupling in accordance with Claim 1 or 2, **characterised in that** the interlocking surfaces (264, 274) which taper in the direction of engagement extend conically towards one another.

4. A trailer coupling in accordance with any of the Claims 1 to 3, **characterised in that** the interlocking elements (70, 80) comprise interlocking surfaces (266, 276) which extend in parallel with the direction of engagement.

5. A trailer coupling in accordance with Claim 4, **characterised in that** the interlocking surfaces (266, 276) which extend in parallel with the direction of engagement adjoin the interlocking surfaces (264, 274) which taper in the direction of engagement.

6. A trailer coupling in accordance with any of the preceding Claims, **characterised in that** the interlocking elements (70, 80) can be restrained in the position thereof in which the pivotal element (60) is fixed relative to the pivot bearing body (30) in mutually non-rotatable manner by means of a wedge mechanism (48, 50; 98, 100; 182, 188).

7. A trailer coupling in accordance with Claim 6, **characterised in that** the interlocking elements (70, 80) are arranged between the pivotal element (60) and a bearing cheek (36) of the pivot bearing body (30), and **in that** the wedge mechanism (48, 50; 182, 188) acts on the pivotal element (60) on the one hand and on the bearing cheek (36) on the other.

8. A trailer coupling in accordance with Claim 7, **characterised in that** the wedge mechanism (48, 50; 182, 188) is in direct engagement with the bearing cheek (36).

9. A trailer coupling in accordance with any of the Claims 6 to 8, **characterised in that** the wedge mechanism is formed by two interengaging threads (48, 50; 98, 100; 182, 188).

10. A trailer coupling in accordance with any of the preceding Claims, **characterised in that** a wedge mechanism (48, 50; 98, 100; 182, 188) is provided for the purposes of producing the movement of the pivotal element (60) along the pivotal axis (22) relative to the pivot bearing body (30).

11. A trailer coupling in accordance with Claim 10, **characterised in that** the selfsame wedge mechanism (48, 50; 98, 100; 182, 188) serves for the displacement of the pivotal element (60) relative to the pivot bearing body (30) on the one hand, and for restraining the interlocking elements (70, 80) on the other.

12. A trailer coupling in accordance with any of the preceding Claims, **characterised in that** a displacement of the pivotal element (60) between the individual positions is attained by means of a displacement of the bearing pin (38) along the pivotal axis (22)

13. A trailer coupling in accordance with Claim 12, **characterised in that** the interlocking elements (70, 80) are adapted to be restrained together by the bearing pin (38) for the purposes of fixing the pivotal element (60) in non-rotatable manner.

14. A trailer coupling in accordance with any of the preceding Claims, **characterised in that** the bearing pin (38) is rotatably mounted in the pivot bearing body (30) and a pivotal movement of the pivotal element (60) relative to the pivot bearing body (30)is effected by means of the bearing pin (38), and **in that** a torque relieving coupling (122, 124) is provided between the rotatably driven bearing pin (38) and the pivotal element (60).

15. A trailer coupling in accordance with any of the preceding Claims, **characterised in that** the pivotal element (60) is movable along the pivotal axis (22) between a position in which it is pivotal relative to the pivot bearing body (30) and a holding position in which the pivotal element (60) is fixed on the pivot bearing body (30) in mutually non-rotatable manner.

16. A trailer coupling in accordance with Claim 15, **characterised in that** the pivotal element (60) is in said one holding position both in the rest position (R) and in the operative position (A) of the ball neck (10).

17. A trailer coupling in accordance with Claim 15, **characterised in that** the pivotal element (60) is in a first position in the rest position (R) of the ball neck (10), and **in that** the pivotal element (60) is movable from said first position into the pivotal position and from the pivotal position into the holding position in which the ball neck (10) is in the operative position (A).

18. A trailer coupling in accordance with Claim 17, **characterised in that** said first position is also a holding position, in which the pivotal element (60) is fixed relative to the pivot bearing body (30) in mutually non-rotatable manner.

19. A trailer coupling in accordance with Claim 18, **characterised in that** the pivotal element (60) is fixed relative to the pivot bearing body (30) in said first position by an interlocking arrangement.

20. A trailer coupling in accordance with any of the preceding Claims, **characterised in that** the pivotal element is movable along the pivotal axis (22) between the individual positions by means of a motorised drive (58).

21. A trailer coupling in accordance with Claim 20, **characterised in that** the motorised drive (58) drives the wedge mechanism.

22. A trailer coupling in accordance with any of the preceding Claims, **characterised in that** the pivotal element (60), in the position thereof wherein it is pivotal relative to the pivot bearing body (30), is pivotal between an operative position (A) and a rest position (R) by means of a motorised drive (66, 58).

23. A trailer coupling in accordance with Claim 22, **characterised in that** the motorised drive (66) is provided exclusively for the pivotal movement of the pivotal element (60).

24. A trailer coupling in accordance with Claim 22, **characterised in that** a pivoting drive (120) for the pivotal element (60) is derived from a motorised drive (58) which is effective for the displacement of the pivotal element (60) along the pivotal axis (22) between the individual positions.

25. A trailer coupling in accordance with Claim 24, **characterised in that** the pivoting drive (120) is coupled via a torque relieving coupling (122, 124) to the motorised drive for the movement of the pivotal element (60) along the pivotal axis (22).

26. A trailer coupling in accordance with any of the preceding claims, **characterised in that** the locking device comprises a first interlocking element (70) and a second interlocking element (80), which can be moved by a first motorised drive (58) into a position non-rotatably fixing the pivotal element (60) relative to the pivot bearing body (30), and **in that** the pivotal element (30) can be pivoted by means of a second motorised drive (66) between the operative position (A) and the rest position (R).

27. A trailer coupling in accordance with any of the preceding Claims, **characterised in that** it comprises a control system (300), and **in that** the movements of the pivotal element (60) from the operative position (A) into the rest position (R) and vice versa are adapted to be monitored by said control system (300) by means of at least one sensor (302).

28. A trailer coupling in accordance with Claim 27, **characterised in that** the control system (300) interrupts the pivotal movement of the pivotal element (60) in the event of the control system (300) detecting a deviation of the movement of the pivotal element (60) from the predetermined form of movement.

29. A trailer coupling in accordance with Claim 27 or 28, **characterised in that** the individual positions of the pivotal element (60) are detectable by means of the sensor (302).

30. A trailer coupling in accordance with Claim 29, **characterised in that** the movement of the pivotal element (60) is detectable by means of the sensor (302) **in that** said sensor scans a guide track (306).

31. A trailer coupling in accordance with any of Claims 27 to 30, **characterised in that** the control system (300) comprises a current monitoring arrangement (332) for the motorised drive (58), and **in that** the control system (300) interrupts the drive (58) in the event that a predetermined current level is exceeded.

## Revendications

1. Attelage de remorque pour véhicules automobiles comprenant un corps de palier de pivotement (30) disposé de manière fixée sur le véhicule, sur lequel un élément pivotant (60) est logé à pivotement autour d'un axe de pivotement (22), un col de boule (10) s'étendant depuis l'élément pivotant (60), qui porte sur son extrémité éloignée de l'élément pivotant (60) une boule d'attelage (12) et qui peut être pivoté par un mouvement de pivotement autour de l'axe de pivotement entre une position de travail (A) et une position de repos (R), et un dispositif de verrouillage pour la fixation en rotation par complémentarité de forme de l'élément pivotant (60) par rapport au corps de palier de pivotement (30),
**caractérisé en ce que** l'élément pivotant (60) est logé au moyen d'un tourillon (38) sur le corps de palier de pivotement (30) et peut être pivoté par rapport au tourillon (38), **en ce que** l'élément pivotant (60) est monté à coulissement sur le corps de palier de pivotement (30) en direction de son axe de pivotement (22), **en ce que** par le coulissement de l'élément pivotant (60) en direction de l'axe de pivotement (22), l'élément pivotant (60) peut être amené dans une position pivotante par rapport au corps de palier de pivotement (30) et une position fixée en rotation par rapport au corps de palier de pivotement par des éléments d'emboîtement (70, 80), dans laquelle l'élément pivotant (60) peut être fixé en rotation par rapport au corps de palier de pivotement (30) dans la position de travail (A) du col de boule (10) au moyen des éléments d'emboîtement (70, 80), **en ce que** l'élément pivotant (60) peut être fixé par rapport au corps de palier de pivotement (30) au moyen des éléments d'emboîtement (70, 80) dans des sens de rotation contraires autour de l'axe de pivotement (22), **en ce que** l'au moins un premier élément d'emboîtement (70) est réalisé comme un tenon cylindrique (260) et est disposé de manière fixe et bloquée en rotation par rapport à l'élément pivotant (60), **en ce que** l'au moins un deuxième élément d'emboîtement (80) est réalisé comme un trou borgne cylindrique (270) et est relié en rotation au corps de palier de pivotement (30) ainsi qu'est fixé de manière immobile par rapport à celui-ci, **en ce que** le premier élément d'emboîtement (70) et le deuxième élément d'emboîtement (80) peuvent être amenés en engagement avec l'autre élément d'emboîtement (80, 70) respectif par le coulissement de l'élément pivotant (60) en direction de l'axe de pivotement (22) et **en ce qu'**au moins l'un des éléments d'emboîtement (70, 80) présente des surfaces d'emboîtement (264, 274) se rétrécissant dans le sens d'engagement, lesquelles servent à fixer en rotation l'élément pivotant (60) par rapport au corps de palier de pivotement (30) et contre lesquelles repose l'autre élément d'emboîtement (80, 70) respectif pour la fixation en rotation dans les deux sens de rotation contraires.

2. Attelage de remorque selon la revendication 1, **caractérisé en ce que** le col de boule (10) s'étend dans la position de travail (A) dans un plan médian longitudinal (14) du véhicule automobile (16) et dans la position de repos (R) transversalement au plan médian longitudinal (14) .

3. Attelage de remorque selon la revendication 1 ou 2, **caractérisé en ce que** les surfaces (264, 274) se rétrécissant dans le sens d'engagement s'étendent de manière conique l'une vers l'autre.

4. Attelage de remorque selon l'une quelconque des revendications 1 à 3, **caractérisé en ce que** les éléments d'emboîtement (70, 80) présentent des surfaces d'emboîtement (266, 276) s'étendant parallèlement au sens d'engagement.

5. Attelage de remorque selon la revendication 4, **caractérisé en ce que** les surfaces d'emboîtement (266, 276) s'étendant parallèlement dans le sens d'engagement font suite aux surfaces d'emboîtement (264, 274) se rétrécissant dans le sens d'engagement.

6. Attelage de remorque selon l'une quelconque des revendications précédentes, **caractérisé en ce que** les éléments d'emboîtement (70, 80) peuvent être bloqués dans leur position fixant en rotation l'élément pivotant (60) par rapport au corps de palier de pivotement (30) au moyen d'une transmission à clavette (48, 50 ; 98, 100 ; 182, 188) .

7. Attelage de remorque selon la revendication 6, **caractérisé en ce que** les éléments d'emboîtement (70, 80) sont disposés entre l'élément pivotant (60) et une joue de palier (36) du corps de palier de pivotement (30) et **en ce que** la transmission à clavette (48, 50 ; 182, 188) agit d'une part sur l'élément pivotant (60) et d'autre part sur la joue de palier (36).

8. Attelage de remorque selon la revendication 7, **caractérisé en ce que** la transmission à clavette (48, 50 ; 182, 188) engage directement la joue de palier (36).

9. Attelage de remorque selon l'une quelconque des revendications 6 à 8, **caractérisé en ce que** la transmission à clavette est constituée de deux filetages (48, 50 ; 98, 100 ; 182, 188) s'engrenant.

10. Attelage de remorque selon l'une quelconque des revendications précédentes, **caractérisé en ce qu'**une transmission à clavette (48, 50 ; 98, 100 ; 182 ; 188) est prévue pour générer le mouvement de l'élément pivotant (60) en direction de l'axe de pivotement (22) par rapport au corps de palier de pivotement (30).

11. Attelage de remorque selon la revendication 10, **caractérisé en ce que** la même transmission à clavette (48, 50 ; 98, 100 ; 182, 188) sert d'une part à coulisser l'élément pivotant (60) par rapport au corps de palier de pivotement (30) et d'autre part à bloquer les éléments d'emboîtement (70, 80).

12. Attelage de remorque selon l'une quelconque des revendications précédentes, **caractérisé en ce qu'**un coulissement de l'élément pivotant (60) entre chaque endroit peut être obtenu par le biais d'un coulissement du tourillon (38) en direction de l'axe de pivotement (22).

13. Attelage de remorque selon la revendication 12, **caractérisé en ce que** les éléments d'emboîtement (70, 80) pour la fixation en rotation de l'élément pivotant (60) peuvent être bloqués ensemble par le biais du tourillon (38).

14. Attelage de remorque selon l'une quelconque des revendications précédentes, **caractérisé en ce que** le tourillon (38) est monté en rotation dans le corps de palier de pivotement (30) et provoque un mouvement de pivotement de l'élément pivotant (60) par rapport au corps de palier de pivotement (30) et **en ce qu'**un accouplement (122, 124) déclenchant le couple est prévu entre le tourillon (38) entraîné en rotation et l'élément pivotant (60).

15. Attelage de remorque selon l'une quelconque des revendications précédentes, **caractérisé en ce que** l'élément pivotant (60) peut être déplacé en direction de l'axe de pivotement (22) entre une position pivotante par rapport au corps de palier de pivotement (30) et une position d'arrêt, dans laquelle l'élément pivotant (60) est fixé en rotation sur le corps de palier de pivotement (30).

16. Attelage de remorque selon la revendication 15, **caractérisé en ce que** l'élément pivotant (60) se trouve dans la position d'arrêt dans la position de repos (R) ainsi que dans la position de travail (A) du col de boule (10).

17. Attelage de remorque selon la revendication 15, **caractérisé en ce que** l'élément pivotant (60) se trouve dans une première position dans la position de repos (R) du col de boule (10), **en ce que** l'élément pivotant (60) peut être amené de la première position dans la position pivotante et de la position pivotante dans la position d'arrêt, dans laquelle le col de boule (10) se trouve dans la position de travail (A).

18. Attelage de remorque selon la revendication 17, **caractérisé en ce que** la première position est également une position d'arrêt, dans laquelle l'élément pivotant (60) est fixé en rotation par rapport au corps de palier de pivotement (30).

19. Attelage de remorque selon la revendication 18, **caractérisé en ce que** l'élément pivotant (60) est fixé dans la première position par complémentarité de forme par rapport au corps de palier de pivotement (30).

20. Attelage de remorque selon l'une quelconque des revendications précédentes, **caractérisé en ce que** l'élément pivotant peut être déplacé au moyen d'un entraînement (58) motorisé en direction de l'axe de pivotement (22) entre chaque position.

21. Attelage de remorque selon la revendication 20, **caractérisé en ce que** l'entraînement (58) motorisé entraîne la transmission à clavette.

22. Attelage de remorque selon l'une quelconque des revendications précédentes, **caractérisé en ce que** l'élément pivotant (60) peut être pivoté dans sa position pivotante par rapport au corps de palier de pivotement (30) au moyen d'un entraînement (66, 58) motorisé entre une position de travail (A) et une position de repos (R) .

23. Attelage de remorque selon la revendication 22, **caractérisé en ce que** l'entraînement (66) motorisé est exclusivement prévu pour le mouvement de pivotement de l'élément pivotant (60) .

24. Attelage de remorque selon la revendication 22, **caractérisé en ce qu'**un entraînement pivotant (120) pour l'élément pivotant (60) est dérivé d'un entraînement (58) motorisé, lequel provoque le coulissement de l'élément pivotant (60) en direction de l'axe de pivotement (22) entre chaque position.

25. Attelage de remorque selon la revendication 24, **caractérisé en ce que** l'entraînement pivotant (120) est couplé à l'entraînement motorisé pour le mouvement de l'élément pivotant (60) en direction de l'axe de pivotement (22) par le biais d'un accouplement (122, 124) déclenchant le couple.

26. Attelage de remorque selon l'une quelconque des revendications précédentes, **caractérisé en ce que** le dispositif de verrouillage comprend un premier élément d'emboîtement (70) et un deuxième élément d'emboîtement (80) qui peuvent être amenés par un premier entraînement (58) motorisé dans une position fixant en rotation l'élément pivotant (60) par rapport au corps de palier de pivotement (30), et **en ce que** l'élément pivotant (30) peut être pivoté au moyen d'un deuxième entraînement (66) motorisé entre la position de travail (A) et la position de repos (R).

27. Attelage de remorque selon l'une quelconque des revendications précédentes, **caractérisé en ce que** celui-ci comprend une commande (300) et **en ce que** les mouvements de l'élément pivotant (60) de la position de travail (A) dans la position de repos (R) et inversement peuvent être surveillés avec la commande (300) au moyen d'au moins un capteur (302).

28. Attelage de remorque selon la revendication 27, **caractérisé en ce que** la commande (300) interrompt le mouvement de pivotement de l'élément pivotant (60) si la commande (300) détecte une divergence du mouvement de l'élément pivotant (60) par rapport à la forme de mouvement prescrite.

29. Attelage de remorque selon la revendication 27 ou 28, **caractérisé en ce que** chaque position de l'élément pivotant (60) peut être détectée au moyen du capteur (302).

30. Attelage de remorque selon la revendication 29, **caractérisé en ce que** le mouvement de l'élément pivotant (60) peut être détecté au moyen du capteur (302) du fait que celui balaye une coulisse (306).

31. Attelage de remorque selon l'une quelconque des revendications 27 à 30, **caractérisé en ce que** la commande (300) présente une surveillance de courant (332) pour 1"entraînement (58) motorisé et **en ce qu'**en cas de dépassement d'un courant prescrit, la commande (300) interrompt l'entraînement (58).
